(19) **Europäisches Patentamt / European Patent Office / Office européen des brevets**

(11) **EP 1 953 989 A1**

(12) **EUROPEAN PATENT APPLICATION**
published in accordance with Art. 158(3) EPC

(43) Date of publication:
**06.08.2008 Bulletin 2008/32**

(21) Application number: **06823304.8**

(22) Date of filing: **10.11.2006**

(51) Int Cl.:
*H04L 29/06* (2006.01)      *G06F 13/00* (2006.01)
*H04M 1/02* (2006.01)      *H04N 7/173* (2006.01)
*H04Q 7/38* (2006.01)

(86) International application number:
**PCT/JP2006/322482**

(87) International publication number:
**WO 2007/055326 (18.05.2007 Gazette 2007/20)**

(84) Designated Contracting States:
**DE FR GB IT**

(30) Priority: **10.11.2005 JP 2005326537**

(71) Applicant: **Sharp Kabushiki Kaisha**
**Osaka-shi, Osaka 545-8522 (JP)**

(72) Inventors:
• **UEDA, Toru**
**Kyoto 619-0215 (JP)**
• **NAOE, Hitoshi**
**Kitakatsuragi-gun, Nara 636-0081 (JP)**
• **FUKAE, Fumihiro**
**Nara 633-0064 (JP)**

• **KAMINOKADO, Tsukasa**
**Nara 632-0093 (JP)**
• **UMEMOTO, Azusa**
**Kizugawa-shi, Kyoto 619-0202 (JP)**
• **ENATSU, Aya**
**Chiba-shi, Chiba 262-0033 (JP)**
• **NAKAGAWA, Katsuya**
**Kizugawa.shi, Kyoto 619-0223 (JP)**
• **SAKAI, Koji**
**Osaka-shi, Osaka 543-0052 (JP)**

(74) Representative: **Müller - Hoffmann & Partner**
**Patentanwälte**
**Innere Wiener Straße 17**
**D-81667 München (DE)**

(54) **DATA TRANSMITTER, ITS CONTROL METHOD, DATA RECEIVER AND ITS CONTROL METHOD, DATA TRANSMITTING SYSTEM, DATA TRANSMITTER CONTROLLING PROGRAM, DATA RECEIVER CONTROLLING PROGRAM, AND RECORDING MEDIUM FOR RECORDING THE PROGRAMS**

(57)     A content transmission device (11) transmits communications data by infrared. The content transmission device (11) includes: a one-way communications section (48) for transmitting the communications data by one-way communications; a two-way communications section (49) for transmitting the communications data by two-way communications; and a control section (40) for selecting which of the one-way communications section (48) and the two-way communications section (49) transmits the communications data.

FIG. 7

**Description**

TECHNICAL FIELD

The present invention relates to a data transmission device for wirelessly transmitting communications data and a method of controlling the data transmission device, a data receiving device for wirelessly receiving communications data and a method of controlling the data receiving device, a data transfer system, a data transmission device control program, a data receiving device control program, and a storage medium containing the programs.

Specifically, the present invention relates to a data transfer system which enables a device to use data stored in a mobile information terminal. Especially, the present invention relates to a data transfer system in which information stored in a portable device (ex. a camera-equipped mobile phone handset, a PDA (personal data assistant) equipped with a communications function, or a digital camera) which can obtain and create some sort of information, but is limited in information display and reproduction capability can be easily used by a device, such as a television receiver or an audio device, which has more advanced information display and reproduction capability.

BACKGROUND ART

In recent years, mobile phone handsets have become increasingly multifunctional. Typical examples of multifunctional mobile phone handsets include mobile phone handsets with a built-in digital camera, high-resolution LCD (liquid crystal displays), and an Internet access function. Use of this mobile phone handset enables a user to take an image with use of the digital camera and transmits the image to another information communications terminal via a mobile phone network or, in some cases, via another communications network such as the Internet, with use of an email transmitting function of the mobile phone handset.

Furthermore, there has been widespread use of mobile phone handsets having a function of reproducing music. It is becoming increasingly common to use a mobile phone handset as a portable music player by reproducing music data downloaded to the mobile phone handset from an Internet site.

Meanwhile, there has been an ongoing increase in the capacity of built-in memory of mobile phone handsets, leading to a dramatic increase in the amount of data that can be stored in a mobile phone handset. For this reason, a large number of users use mobile phone handsets in such a manner as to save electronic data such as photographs and music in the mobile phone handsets and enjoy by reproducing the electronic data when they are away from home.

However, problem arise in such use due to restrictions imposed on the size of the device by the functional characteristics of a mobile phone handset. For example, a mobile phone handset has a small LCD, which causes inconvenience when a large number of people view an image on the LCD. Even if there is improvement in the resolution of the LCD, these problems remain into the future unless there is change in the size of the LCD.

Further, in the case of music, it is impossible to provide a mobile phone handset with large speakers. This makes it necessary to use an earphone, a headphone, or small speakers. Use of an earphone or a headphone does not allow many people to listen to the music together. Use of a small speaker ends up in poor replay sound quality.

Various proposals have been made to avoid such problems as mentioned above. For example, Patent Document 1 listed below discloses a printer for receiving, from a network, a document file with a header containing information indicative of a file type and a print layout, for extracting the information indicative of the file type and the print layout from the header added to the received document file, for converting print data indicative of the document file into print control code in accordance with the extracted information indicative of the file type and the print layout, and for printing from data in accordance with the control code thus obtained. When the printer thus arranged receives, from a mobile phone handset, a document file with a header containing information indicative of whether to print from character data or image data, the printer can perform a print operation suited to the character data or the image data.

Further, Patent Document 2 listed below discloses a printer, having a plurality of receiving means for receiving data from an external device, which sets print conditions in accordance with the receiving means having received the data and performs a print operation in accordance with the data under the print conditions thus set. Further, Patent Document 2 discloses that each of the receiving means is a logic channel that is logically set up, that the logic channel is set up in accordance with a transfer format used in receiving the data from the external device, and that the transfer format is a document data transfer protocol for transferring document data and an image data transfer protocol for transferring image data.

The printer thus arranged uses the document data transfer protocol in receiving document data, for example, from a mobile phone handset, and uses the image data transfer protocol in receiving image data, for example, from a mobile phone handset. This allows the printer to use document print settings in printing from the document data transferred according to the document data transfer protocol and to use image print settings in printing from the data transferred according to the image data transfer protocol.

Further, Patent Document 3 listed below discloses a content reproducing system for reproducing content (karaoke music data) transferred from a mobile communications terminal to a household electrical appliance by infrared, after the content is first downloaded to the mobile communications terminal. According to the content reproducing system, a mobile phone handset acting as a mobile communications terminal obtains karaoke music data and sends it to a digital TV (television) receiver acting as a household electrical appliance, so that the karaoke music data can be reproduced by the digital TV receiver, which gives better picture output performance and better sound output performance than the mobile phone handset. This makes it possible to enjoy karaoke with use of a device that delivers better performance than a mobile phone handset.

Further, Patent Document 4 listed below discloses a wireless communications device in which a wireless section having a camera unit and a monitor section having a display function are capable of wirelessly communicating with each other, in which video is wirelessly transmitted from the camera unit to the monitor section by two-way communications, and in which the camera unit is controlled by one-way communications with use of another remote controller.

Patent Document 1: Japanese Unexamined Patent Publication (Tokukai) No. 2000-10745 (published January 14, 2000)
Patent Document 2: Japanese Unexamined Patent Publication (Tokukai) No. 2004-154960 (published June 3, 2004)
Patent Document 3: Japanese Unexamined Patent Publication (Tokukai) No. 2004-177586 (published June 24, 2004)
Patent Document 4: Japanese Unexamined Patent Publication 11-317724/1999 (Tokukaihei 11-317724; published November 16, 1999)

DISCLOSURE OF INVENTION

Normally, it is preferable to perform two-way data communications. This is because transmission with bilateral transmittal confirmation makes it possible to adopt a method, such as retransmission, which improves reliability, and to allow a data-transmission end to confirm the completion of transmission.

On the other hand, in the case of one-way communications, as with an infrared remote controller, a transmitter requires a transmission section while requiring no receiving section, and a receiver requires a receiving section while requiring no transmission section. This makes it possible to reduce costs as compared with two-way communications.

Further, for example, in the case of a television receiver and an infrared remote controller for remotely controlling the television receiver, the television receiver performs an operation, as in the case of channel switching, which enables the user to know whether the television receiver has received a remote control signal from the infrared remote controller. Therefore, there is no problem, even without the aforementioned transmittal confirmation.

Furthermore, in the case of one-way transmission, the transmitter does not need to process transmittal confirmation. Therefore, one-way communications can be performed at a higher speed than two-way communications. Further, in the case of one-way transmission, there is no response from a receiver. Therefore, there is no such problem as collision of response signals, and a plurality of receivers can receive data from the transmitter in a single transmission.

Generally, free-space optical (e.g. infrared) communications are performed by two-way communications as is the case with IrDA (Infrared Data Association). In fact, mobile phone handsets exchange addresses, photographs, or other forms of data with one another by IrDA-based two-way communications.

Thus, conventionally, a communications scheme is determined depending on the contents of the data to be transmitted. This has sometimes imposed a burden on a user because data communications could be performed according to a communications scheme that the user would not like. For example, in cases where mobile phone handsets exchange addresses or photographs with each other, the mobile phone handsets need to be brought close to each other in order to perform IrDA-based two-way communications. Further, although it is conceivable that a mobile-phone handset user may wish to send an address or a photograph simultaneously to mobile phone handsets of his/her friends, IrDA has difficulty in handling such a situation.

The present invention has been conceived in view of the foregoing problems, and it is an object of the present invention to provide a data transmission device and a data receiving device, etc. that are capable of flexible data communications.

In order to solve the problems, the data transmission device in accordance with the present invention is characterized in that the device includes data transmission means for wirelessly transmitting communications data, the data transmission means including: one-way communications means for transmitting the communications data by one-way communications; two-way communications means for transmitting the communications data by two-way communications; and selection means for selecting which of the one-way communications means and the two-way communications means transmits the communications data.

The term "one-way communications" here means that a communications-data receiving end transmits no signal to a communications-data transmission end not only at the time of transmission of communications data but also at the time of connection establishment and at the time of a disconnection process. On the other hand, the term "two-way communications" here means that a receiving end transmits a signal to a transmission end at the time of transmission of communications data. Further, examples of wireless communications include infrared optical communications and radio-frequency communications.

According to the foregoing configuration, the selection means selects whether the communications data should be transmitted by the one-way communications or by the two-way communications. This makes it possible to switch between communications schemes according to a user's wishes and to switch between communications schemes according to the type and/or volume of communications data and/or the state of communications, thereby enabling flexible data communications.

In the case of one-way communications, it is not necessary to specify a destination. This makes it unnecessary for the communications data to contain a destination address indicative of the destination. On the other hand, in the case of two-way communications, it is necessary to specify a destination. This makes it necessary for the communications data to contain a destination address.

In view of this, the data transmission device according to the present invention is preferably arranged such that the two-way communications means transmits the communications data containing a broadcast address as a destination address indicative of a destination. In this case, it is possible to cause one-way communications and two-way communications to be identical in format. This makes it possible to a one-way communications structure and a two-way communications structure to share some common components, thereby enabling a reduction in the number of components and a reduction in the size of the circuit.

The data transmission device according to the present invention is preferably arranged such that: the two-way communications means includes normal two-way communications means for performing normal two-way communications and simple two-way communications means for performing simple two-way communications which involve less complex procedures than the normal two-way communications; and the selection means selects which of the one-way communications means, the normal two-way communications means, and the simple two-way communications means transmits the communications data.

According to the foregoing configuration, the selection means selects which of the one-way communications means, the normal two-way communications means, and the simple two-way communications means transmits the communications data.

Generally, one-way communications are performed at a high transfer rate, but make it difficult for the transmission end to see whether or not it has succeeded in transmitting communications data. Meanwhile, normal two-way communications make it possible to transmit communications data reliably to a specific destination, but have a low transfer rate. Involving relatively simple procedures when compared to normal two-way communications, simple two-way communications exhibit a relatively high transfer rate and make it possible to transmit communications data reliably.

Since the data transmission device can switch communications schemes between one-way communications, normal two-way communications, and simple two-way communications having advantages of both the one-way communications and the normal two-way communications, the data transmission device makes it possible to perform data communications according to a more suitable communications scheme.

It should be noted that the selection means may select, in accordance with a state of communications with a receiving end, which of the one-way communications means and the two-way communications means transmits the communications data. In that case, a suitable communications scheme can be selected according to the state of communications.

Further, the selection means may select, in accordance with at least one of a data set count, type, volume, estimated communications time, and transfer history of communications data to be transmitted, which of the one-way communications means and the two-way communications means transmits the communications data.

One-way communications are preferred, for example, when transmitting parts of plural sets of data, and two-way communications are preferred, for example, when transmitting all of the plural sets of data. Two-way communications are also preferred when transmitting communications data containing personal information. One-way communications are preferred when transmitting communications data containing content free from copyrights. Further, two-way communications are preferred when transmitting a large volume of communications data because an overflow may occur in the receiving end. Further, in cases where the estimated communications time is long, it is desirable to perform two-way communications in order to reduce communications errors from occurring. Further, in cases where the transfer history shows that the same content has been transmitted many times by the same communications scheme or that communications errors have occurred many times, it is desirable to perform transmission by a different communications scheme.

Therefore, in such cases as described above, when the user selects communications data to be transmitted, the selection means automatically selects a suitable communications scheme, thereby saving the user time and labor.

The data transmission device according to the present invention may further include notification means for, when the state of communications with the receiving end has deteriorated, giving a user a message which prompts the user to move the data transmission device closer to a receiving-end device.

The data transmission device according to the present invention is preferably arranged so as to further include operation means for accepting a user operation, wherein the selection means selects, in accordance with the user operation of the operation means, which of the one-way communications means and the two-way communications means transmits the communications data. This allows the user to select a desired communications scheme.

However, in cases where the user is allowed to freely select a communications scheme, one-way communications may be performed instead of two-way communications, for example, when transmitting communications data containing personal information, and the personal information may therefore be put at risk of leakage. In view of this, it is preferable that the selection means restricts, in accordance with a data set count, type, and/or volume of communications data to be transmitted, the selection made in accordance with the user operation of the operation means.

The data transmission device according to the present invention may further include notification means for notifying a user of whether the selection means has selected the one-way communications means or the two-way communications means. This allows the user to grasp what communications scheme is being used. Therefore, in cases where data communications are being performed according to an undesired communications scheme, the data communications can be suspended immediately.

An examples of the communications data is a piece of content.

The data transmission device according to the present invention is preferably arranged so as to further include: thumbnail display means for displaying thumbnails for pieces of content; and operation means for accepting a user operation, wherein the communications means transmits communications data containing a piece of content corresponding to a thumbnail selected by the user via the operation means. This makes it possible to simultaneously display thumbnails of plural pieces of content, thereby allowing the user to easily select a piece of content that he/she wishes to transmit.

The data transmission device according to the present invention is preferably arranged so as to further include: content storage means for storing plural pieces of content; and content selection means for selecting one piece of content after the other from the plural pieces of content, wherein the data transmission means transmits communications data containing the piece of content selected by the content selection means. This makes it possible to reproduce plural pieces of content one after the other at a receiving end, thereby enabling the user to enjoy a so-called slide show.

The data transmission device according to the present invention is preferably arranged so as to further include: content storage means for storing plural pieces of content; content selection means for selecting one piece of content after the other from the plural pieces of content; reproduction means for reproducing the selected piece of content or a part thereof; and data receiving means for receiving communications data, wherein the data transmission means transmits, in accordance with a request contained in the communications data received by the data receiving means, communications data containing a piece of content that is being reproduced or that has been reproduced.

According to the foregoing configuration, reproduction of a piece of content or a part thereof helps the user to understand the contents of the plural pieces of content stored in the content storage means. Then, upon receipt of communications data containing a request for a piece of content desired by the user, the piece of content is transmitted. That is, only a requested piece of content is transmitted. Therefore, as compared with the case where the plural pieces of content stored in the content storage means are transmitted one after the other, the workload of a communications process can be remarkably reduced.

After the user comes to want a particular piece of content, it takes a little time to receive communications data containing a request for that piece of content.

In view of this, it is preferable that if the data receiving means receives the request either during a period from a start of reproduction of a given piece of content or a part thereof by the reproduction means to a start of reproduction of a next piece of content or a part thereof by the reproduction means or during a period defined by shifting the period by a predetermined time, the data transmission means transmits communications data containing the given piece of content.

The data transmission device according to the present invention may be arranged so as to further include processing means for processing the content, wherein the data transmission means transmits communications data containing the processed content. This makes it unnecessary to provide processing-converting means at a receiving end, thereby enabling simplification of the configuration of the receiving-end device

Examples of the processing of the content may include rotation of an image, scaling down of the image, scaling up of the image, and a combination thereof. Further, the image may be a still image or a moving image.

The data transmission device according to the present invention is preferably arranged so as to further include compression means for compressing the processed content, wherein the data transmission means transmits communications data containing the content compressed by the compression means. This makes it possible to reduce the amount of communications and to shorten the time required for communications, thereby achieving a reduction in the workload of communications.

Further, in cases where the content contains a document containing a plurality of pages, it is preferable that: the processing means includes page detection means for detecting page divisions from the document, page dividing means for dividing the document into pages in accordance with the detected page divisions, and filing means for making the individual pages into which the document has been divided into separate files; and the data transmission means sequentially transmits, for each of the pages, communications data containing a file of that page. This makes it possible to transmit a plurality of pages of a document one by one, for example, to display the pages one by one on a projector having a data receiving function. Therefore, this configuration is effective especially in making a presentation.

In cases where communications data is transmitted by light, such as infrared light, which has high directivity, trial and error is needed to direct light emitted by a data transmission device to light receiving means of a data receiving device.

Accordingly, in cases where the data transmission device further includes a housing and the housing includes light emitting means for transmitting the communications data by light, it is preferable that the housing includes emission direction adjusting means for tilting light emitted by the light emitting means toward a normal to a surface on which the housing is disposed.

Further, in cases where the data transmission device further includes a housing containing a main body and a lid coupled to the main body like a hinge, the lid has a surface provided with light emitting means for transmitting the communications data by light, it is preferable that the housing includes angle fixing means for holding the main body and the lid at a predetermined angle and that the predetermined angle at which the main body and the lid are held by the angle fixing means is from 15° to 75°, inclusive.

In order to solve the foregoing problems, a data receiving device according to the present invention is characterized in that the device includes data receiving means for wirelessly receiving communications data containing compressed image content, the data receiving device including: content storage means for storing the compressed image content received by the data receiving means; decompression means for retrieving the compressed image content from the content storage means and decompressing the compressed image content; scaling means for scaling up/down the decompressed image content; and output means for outputting the scaled image content.

It should be noted here that the output means may be display means for displaying the image content or may be transmission means for transmitting the image content to a display device provided outside of the data receiving device.

The foregoing configuration makes it possible to decompress the received image content and to scale up / down the received decompressed image content. Therefore, the received image content can be output after being converted to an appropriate size.

It should be noted here that examples of the appropriate size include a size corresponding to a display size. Further, in cases where the image content has a small size, scaling up the image content too much causes block-noise to be so conspicuous that the user has difficulty in viewing the image content. In view of this, it is desirable that the scaling means be restricted in scaling ratio.

Meanwhile, in cases where the image content has a sufficiently large size, e.g., 8 megapixel, such a problem is unlikely to occur. Therefore, it is desirable that there be no such restriction. Accordingly, it is desirable to change the maximum value of the scaling ratio in accordance with the size of the image content.

The data receiving device according to the present invention is preferably arranged such that: the scaling means has a function of rotating the decompressed image content; the data receiving means receives orientation information indicative of orientation of the image content; and the scaling means rotates the image content in accordance with the orientation information.

Many digital cameras recently are provided with a sensor that detects orientation, and many files of photographed images have additional, orientation information indicative of orientation. According to the foregoing configuration, the image content is rotated in accordance with the orientation information, so that the image content can be displayed in an appropriate orientation.

The data receiving device according to the present invention is preferably arranged such that: the data receiving means receives attribute information for the image content; and the output means outputs a part or all of the scaled image content and the attribute information for the image content. In this case, the information for the image content is output together with the image content; therefore, this configuration is useful to the user. Examples of the attribute information include a filming date and time, place of filming, user comments, title, cast, broadcast date and time, and broadcast channel.

The data receiving device according to the present invention is preferably arranged such that: the data receiving means further receives communications data containing a command which is instruction information given from a transmission end; and the scaling means converts the image content in accordance with the command. This enables the transmission end to perform an operation of outputting the image content.

It should be noted that the command may contain a parameter necessary for converting the image content. Further, the command may be contained in a name of a file contained in the communications data. Further, when the communications data contains a file having a particular name, the data receiving means may determine that the file contains image content containing a command.

Incidentally, there is a case where a progress bar is displayed during reception of content in order to indicate the progress of the reception. In such a case, the progress bar is displayed every time content containing a command is received. This may be annoying to the user. In view of this, it is preferable that until the data receiving means determines whether incoming communications data contains a command, the output means stops output of information indicative of a reception state of the communications data.

It is acceptable to sequentially display plural pieces of image content as in the aforementioned slide show. It is also acceptable to simultaneously display the plural pieces of image content. However, in the latter case, it is necessary to scale up/down the plural pieces of image content in accordance with the display sizes of the plural pieces of image content.

Further, the data receiving device according to the present invention is preferably arranged so as to further include transmission means for transmitting, to an external display device or printer, the communications data containing the compressed image content. For example, in cases where the transmission end is a mobile information terminal such as a mobile phone handset and the receiving end is a desktop-type information terminal such as a large-screen digital TV receiver, it is usual for the desktop-type information terminal to have a better processing circuit. In view of this, there is a possibility that the process can be performed at a higher speed by transmitting the image content from the transmission end to the date receiving device and then transmitting the image content from the date receiving device to the external display device or printer than by directly transmitting the image content from the transmission end to the external display device or printer.

In cases where the image content is displayed on a screen, it is usual for the user to view the display within a range $\pm 45°$ off the normal to the display screen in a horizontal plane. Therefore, in cases where the communications data is transmitted by light such as infrared light, it is preferable that the data receiving device is able to receive the infrared light within that range.

Accordingly, in cases where the data receiving device further includes a housing and the housing includes light detection means for receiving the communications data by light, it is preferable that the light detection means is capable of detecting light within a range of incidence of 90° in a plane parallel to a surface on which the housing is disposed.

In order to detect light within the range of incidence, it is conceivable that the light detection means includes a collective lens for collecting light emitted in the range of incidence and a single light receiving element for receiving light from the collective lens. Further, it is conceivable that the light detection means includes a plurality of light receiving elements provided so as to detect light within different ranges of incidence.

Further, in cases where the data receiving device further includes display means for displaying the scaled image content and reception status indication means for indicating a reception status on the data receiving means, it is preferable that the reception status indication means is separated from the light detection means by a distance less than or equal to a quarter of a horizontal dimension of a display screen of the display means. This makes it highly possible that the light detection means detects light emitted at the reception status indication means by the data transmission device.

In order to solve the foregoing problems, a data receiving device according to the present invention is characterized in that the device includes data receiving means for wirelessly receiving communications data, the data receiving device including: data reception restriction means for restricting reception by the data receiving means.

For example, in the case of one-way communications, the communications data can be received by any information communications terminal. Therefore, the data receiving device may receive unnecessary communications data. In this case, it is not preferable to perform some sort of process on the unnecessary communications data, for example, to turn on an indicator to show failure in reception, success in reception, or the like, because such a process causes the data receiving device to perform a wasteful process.

According to the foregoing configuration, the data reception restriction means restricts reception by the data receiving means. This makes it possible to prevent reception of unnecessary data.

It is preferable that the data reception restriction means instructs the data receiving means to operate in any one of a reception mode in which all communications data is received, a restricted reception mode in which only particular communications data is received, and a reception rejecting mode in which no communications data is received.

Further, the data receiving device according to the present invention may be arranged so as to further include command obtaining means for obtaining a command which is instruction information, wherein the data reception restriction means switches between the modes in accordance with the command obtained by the command obtaining means. It should be noted that the command obtaining means may obtain a command from an input device that accepts an input from a user or may obtain a commend from an external communications device via communications means.

The data receiving device according to the present invention may be arranged so as to further include notification means for notifying a user of information, wherein the notification means notifies the user of a reception state of the communications data in the reception mode, notifies the user only of a reception state of the particular communications data in the restricted reception mode, and does not notify the user of a reception state of the communications data in the reception rejecting mode.

It should be noted that the same effects can be brought about by a data transfer system for wirelessly transmitting communications data from a data transmission device arranged as described above to a data receiving device arranged as described above.

In order to solve the foregoing problems, a method for controlling a data transmission device according to the present invention is characterized in that the method is a method of controlling a data transmission device for wirelessly transmitting communications data, the data transmission device including one-way communications means for transmitting the communications data by one-way communications and two-way communications means for transmitting the communications data by two-way communications, the method including the step of selecting, in accordance with at least one of a state of communications with a receiving end and a data set count, type, volume, estimated communications time, and transfer history of communications data to be transmitted, which of the one-way communications means and the two-way communications means transmits the communications data.

The foregoing method makes it possible to select, in accordance with a data set count, type, volume, estimated communications time, a transfer history of communications data to be transmitted, and/or a state of communications, whether to transmit the communications data by one-way communications or two-way communications. As a result, the foregoing method enables flexible data communications.

In order to solve the foregoing problems, a method for controlling a data receiving device according to the present invention is characterized in that the method is a method of controlling a data receiving device including data receiving means for wirelessly receiving communications data containing compressed image content, the method including the steps of: storing, in content storage means, the compressed image content received by the data receiving means; retrieving the compressed image content from the content storage means and decompressing the compressed image content; scaling up/down the decompressed image content; and outputting the scaled image content from the output means.

The foregoing method makes it possible to decompress received image content and to scale up/down the received image content thus decompressed. Therefore, the received communications data can be output after being converted into an appropriate size.

In order to solve the foregoing problems, a method for controlling a data receiving device according to the present invention is characterized in that the method is a method of controlling a data receiving device including data receiving means for wirelessly receiving communications data, the method including the step of restricting reception by the data receiving means.

The foregoing method restricts reception by the data receiving means, thereby preventing reception of unnecessary data.

It should be noted that the individual means in the data transmission device can be realized on a computer by a data transmission device control program. It should also be noted that the individual means in the data receiving device can be realized on a computer by a data receiving device control program.

Furthermore, by storing the data transmission device control program and/or the data receiving device control program in a computer-readable storage medium, the data transmission device control program and/or the data receiving device control program can be executed on any computer.

As described above, a data transmission device according to the present invention can select, in accordance with the type and/or volume of communications data, and/or a state of communications, whether to transmit the communications data by one-way communications or two-way communications, thereby brining about an effect of enabling flexible data communications.

Further, a data receiving device according to the present invention restricts reception by data receiving means, thereby bringing about an effect of preventing reception of unnecessary data.

BRIEF DESCRIPTION OF DRAWINGS

Figure 1 is a schematic oblique view of a content transfer system which is an embodiment of the present invention.
Figure 2 is a plan view showing usage of the content transfer system in a typical living room.
Figure 3 is a table showing which of two-way communications and one-way communications are more suitable in relation to the status of a content transmission device and a content receiving device of the content transfer system.
Figure 4 is a table showing advantages and disadvantages of each communications scheme.
Figure 5(a) is an oblique external view of a mobile phone handset, an example of the content transmission device, when the handset is open.
Figure 5(b) is a rear external view of the mobile phone handset when the handset is closed.
Figure 5(c) is a side external view of the mobile phone handset when the handset is completely open.
Figure 5(d) is a side external view of the mobile phone handset when the handset is slightly open.
Figure 6(a) is a front view of the lid of the mobile phone handset.

Figure 6(b) is a front view of the main body of the mobile phone handset.

Figure 7 is a schematic block diagram of the content transmission device.

Figure 8 is a schematic block diagram of a two-way communications section in the content transmission device.

Figure 9 (a) is a sequence diagram showing signal flows in one-way communications.

Figure 9 (b) is a sequence diagram showing signal flows in normal two-way communications.

Figure 9(c) is a sequence diagram showing signal flows in simple two-way communications.

Figure 10 is a flow chart illustrating a flow of operation of the control section of the content transmission device.

Figure 11 (a) is a sequence diagram for a switching process between the normal two-way communications and the simple two-way communications.

Figure 11(b) is a sequence diagram for a switching process between the normal two-way communications and the simple two-way communications.

Figure 11(c) is a sequence diagram for a switching process between the normal two-way communications and the simple two-way communications.

Figure 12 is a schematic block diagram of the content receiving device.

Figure 13(a) is a front and a plan view of an exemplary light detector provided in the content receiving device.

Figure 13(b) is a front and a plan view of another exemplary light detector.

Figure 14(a) illustrates the size of an image (received content) received by the content receiving device.

Figure 14(b) illustrates the size of an image on a display screen displaying the received content.

Figure 15(a) illustrates the size of an image (received content).

Figure 15(b) illustrates the size of an image (received content).

Figure 15(c) illustrates the size of an image (received content).

Figure 15(d) illustrates the size of an image (display content which is a display of the received content on the display screen) corresponding to the received content shown in Figure 15(a).

Figure 15(e) illustrates the size of an image (display content which is a display of the received content on the display screen) corresponding to the received content shown in Figure 15(b).

Figure 15(f) illustrates the size of an image (display content which is a display of the received content on the display screen) corresponding to the received content shown in Figure 15(c).

Figure 16(a) illustrates the size of an image (received content).

Figure 16(b) illustrates the size of an image (received content).

Figure 16(c) illustrates the size of an image (received content).

Figure 16(d) illustrates the size of an image (display content) corresponding to the received content shown in Figure 16(a).

Figure 16(e) illustrates the size of an image (display content) corresponding to the received content shown in Figure 16(b).

Figure 16(f) illustrates the size of an image (display content) corresponding to the received content shown in Figure 16(c).

Figure 17(a) illustrates the size of an image (display content).

Figure 17(b) illustrates the size of an image (display content).

Figure 17(c) illustrates the size of an image (display content).

Figure 18 is a flow chart illustrating a flow of command processing executed by the content receiving device.

Figure 19 is a flow chart illustrating a flow of operation of the control section of a content transmission device in a content transfer system which is another embodiment of the present invention.

Figure 20 illustrates selection items being displayed on a display screen of the content transmission device.

Figure 21 illustrates a display screen of a content transmission device in a content transfer system which is another embodiment of the present invention, running a slide show.

Figure 22 is a schematic oblique view of a content transfer system which is another embodiment of the present invention.

Figure 23 is a schematic block diagram of a television receiver in the content transfer system.

Figure 24 is a flow chart illustrating a flow of command processing executed by the television receiver.

Figure 25 is a schematic block diagram of a printer in the content transfer system.

Figure 26 is a flow chart illustrating a flow of operation of the control section of the printer.

Figure 27 is a plan external view of a bridge in a content transfer system which is another embodiment of the present invention.

Figure 28 is a schematic oblique view of a content transfer system which is another embodiment of the present invention.

Figure 29 is a schematic block diagram of a television receiver operating as a content transmission device in the content transfer system.

Figure 30 is a block diagram of a flow of operation of the television receiver when the television receiver has received a command from a mobile phone handset in the content transfer system.
Figure 31 is a timing chart illustrating, as an example, the timings of the operation shown in Figure 30.
Figure 32(a) is an oblique external view of a mobile transmitter in a content transfer system which is another embodiment of the present invention.
Figure 32(b) is a plan external view of the mobile transmitter.
Figure 33 is a schematic block diagram of the mobile phone handset.

REFERENCE NUMERALS

10: Content Transfer System (Data Transfer System)
11: Content Transmission Device (Data Transmission Device)
12, 13: Content Receiving Device (Data Receiving Device)
17: Display Device (Reproduction Means)
36: Transmission Section (Light Emitting Means)
40: Control Section (Selection Means, Content Selection Means, Data Transmission Means)
41: Content Storage Section (Content Storage Means)
45: Display Section (Notification Means, Thumbnail Display Means)
46: Operation Section (Operation Means)
48: One-way Communications Section (Data Transmission Means, One-way Communications Means)
49: Two-way Communications Section (Data Transmission Means, Two-way Communications Means, Data Receiving Means)
55: Normal Two-way Communications Control Section (Normal Two-way Communications Means)
56: Simple Two-way Communications Control Section (Simple Two-way Communications Means)
60: Control Section (Data Reception Restriction Means)
61: Communications Section (Data Receiving Means)
62: Command Analysis Section (Command Obtaining Means)
63: Content Storage Section (Content Storage Means)
65: Attribute Determining Section (Image Size Obtaining Means)
66: Content Decompression Section (Decompression Means)
67: Display Size Storage Section (Display Size Storage Means)
68: Image Processing Section (Scaling Means)
69: Display Section (Output Means, Display Means)
70: Image Data Transmission Section (Output Means, Transmission Means)
71, 74: Light Detector (Light Detection Means)
99: Print Data Transmission Section (Transmission Means)
130: Mobile Transmitter (Data Transmission Device)
139: Content Rotation Section (Processing Means)
140: Content Scaling Section (Processing Means)
143: Content Compression Section (Compression Means)

BEST MODE FOR CARRYING OUT INVENTION

Embodiment 1

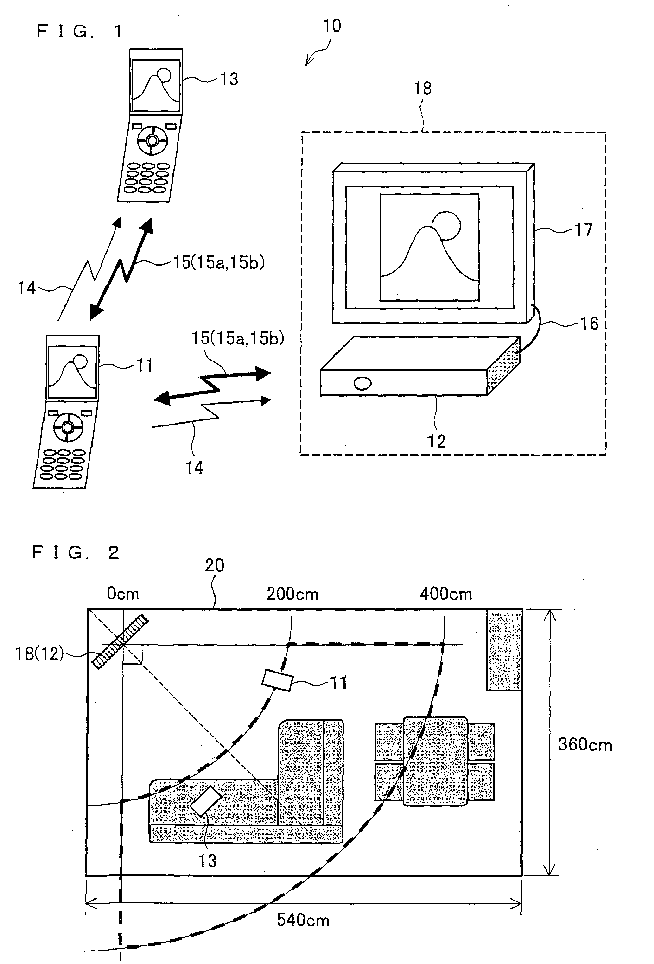

An embodiment of the present invention will be described in reference to Figures 1 to 18. Figure 1 is a schematic of a content transfer system of the present embodiment. As illustrated in the figure, the content transfer system (data transfer system) 10 includes a content transmission device (data transmission device) 11 transmitting content and two content receiving devices (data receiving devices) 12, 13 receiving the content from the content transmission device 11. The content transmission device 11 and the content receiving device 13 are shown as mobile phone handsets in the illustrated example; instead, various other kinds of transmitters and receivers may be used.
Generally, "content" refers to various multimedia information including images, video, music, documents, and address books. "Content" in the context of this application may also refer to elements making up the content. For example, the transmission of personal information on a person contained in an address book from the content transmission device 11 to the content receiving devices 12, 13 is a case of transmission of "content."
The content transmission device 11 and the content receiving devices 12, 13 exchange various information that is required to perform communications, apart from content. Accordingly, the information transferred between the content transmission device 11 and the content receiving devices 12, 13 will be collectively termed communications data.

In the present embodiment, the content transmission device 11 and the content receiving devices 12, 13 are configured so that content can be transmitted from the content transmission device 11 to the content receiving devices 12, 13 by one-way communications 14 and by two-way communications 15.

In this context, assuming that communications data containing content is being transmitted from the content transmission device 11 to the content receiving devices 12, 13, one-way communications refer to those which involve no signal transmission from the content receiving devices 12, 13 to the content transmission device 11 during an establishment of a connection and during a disconnection, as well as during a transmission of communications data. In contrast, assuming that communications data containing content is being transmitted from the content transmission device 11 to the content receiving devices 12, 13, two-way communications refer to those which involve signal transmission from the content receiving devices 12, 13 to the content transmission device 11.

One-way communications by means of a broadcast function are advantageous even with two-way communications during a setup because one-way communications can transmit communications data to more than one receiver (content receiving devices 12, 13) simultaneously. Two-way communications are used, for example, when signals are sent from the receiver to the transmitter (content transmission device 11) to confirm reception of data in the physical, link, and application layers.

The Internet and other advanced networks allow for multiple sessions (logic connections). One-way communications and two-way communications can be used distinctly in each of those sessions.

The one-way communications 14 and the two-way communications 15 are, in the present embodiment, packet communications in which data is transferred in packets. In this context, the packet is a frame (data reassembled in a predetermined format) to which various information, such as a destination address specifying a destination, are added.

The one-way communications 14 and the two-way communications 15 handle packets of the same format in the present embodiment. That configuration reduces differences in communication protocols between the one-way communications 14 and the two-way communications 15 and enables implementation of the multiple communications schemes with as few additional structural elements as possible.

On the contrary, the employment of the same packet format for both schemes imposes a requirement on the destination: it needs to be determined whether the incoming packet is meant for the one-way communications 14 or for the two-way communications 15. Accordingly, each packet in the present embodiment contains communications scheme identification information by which to identify whether the packet belongs to the one-way communications 14 or the two-way communications 15.

No destination is specified in the one-way communications 14. The one-way communications 14 correspond to broadcast or multicast in which data is sent from a source to a plurality of destinations. In that case, the packet contains, as the destination address specifying a destination, a broadcast address which indicates that any content receiving device is permitted to receive the packet. The one-way communications 14 using the broadcast address enable one-to-many communications in which the content receiving devices 12, 13 receive the same signals. Although the one-way communications 14 allow for specifying a particular destination, the address of the destination needs to be known in advance.

The content transmission device 11 communicates with the content receiving devices 12, 13 wirelessly as illustrated in Figure 1. For that purpose, the content transmission device 11 and the content receiving devices 12, 13 each include a communications section capable of wireless communications.

When the wireless communications are carried out by means of infrared or other wavelengths of light, the communications section includes a transmission section and a receiving section. The transmission section transmits signals by means of an LED (light emitting diode) or like light emitting element. The receiving section collects light through lenses to receive the signals on a photo diode or like light detector. When the wireless communications are carried out by means of radio waves, the communications section includes a transmission section and a receiving section each having an antenna converting electrical signals to radio waves and vice versa. In the present embodiment, the wireless communications are carried out by means of infrared (infrared communications). The content receiving devices 12, 13 include no transmission section when they only perform the one-way communications 14.

The content receiving devices 12, 13 receive packets containing content from the content transmission device 11 and decompose them to reproduce the content. The content receiving device 12 sends the reproduced content via a cable 16 to an LCD (liquid crystal display) or like display device 17. Accordingly, the content is displayed on the display device 17. Meanwhile, the content receiving device 13 has a display function as illustrated in Figure 1, therefore capable of displaying the reproduced content. As in these examples, the content receiving device and the display device may be either integral or separate.

Figure 2 shows usage of the content transmission device (mobile phone handset) 11 and the content receiving devices 12, 13 in a living room 20. The content receiving device 12 in the illustrated example is integral with the display device 17 and termed a television receiver 18. A user who watches television/video in the living room 20 generally does so 2 to 4 meters away from the television receiver 18. Therefore, in situations where the user manipulates the mobile phone handset 11 to transfer photographs (still images), movies, or like content from the mobile phone handset 11 to the television receiver 18, the data transfer distance between the mobile phone handset 11 and the television receiver 18 is preferably at least about 2 to 4 meters. This range is far greater than the feasible distance for infrared communications between conventional mobile phone handsets (about 0.2 meters).

The user, when watching television/video in the living room 20, often does so not only right before the television receiver 18, but off the position right before the television receiver 18. The television receiver 18 is preferably capable of receiving infrared light when the receiver 18 is placed in a horizontal plane extending about $\pm 45°$ off the normal to the screen of the television receiver 18 as illustrated in Figure 2. In other words, the television receiver 18 preferably has a horizontal infrared light receiving angle of about 90°. This range is far greater than the feasible light receiving angle for infrared communications between conventional mobile phone handsets (about $\pm 15°$).

Therefore, the content transmission device 11 and the content receiving device 12 need to have a greater transfer area and a greater receiving area respectively than conventional devices if they are used for the one-way communications 14 and the two-way communications 15 in the living room 20. Details will be given later.

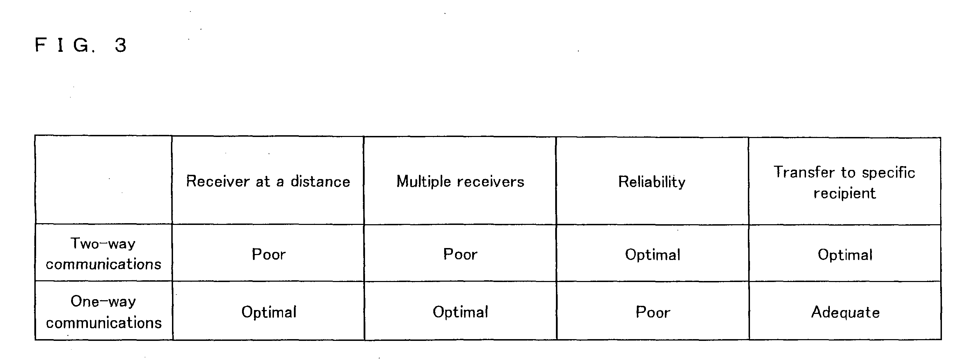

Figure 3 shows which of the two-way communications scheme and the one-way communications scheme is more suitable in relation to the status of the content transmission device and the content receiving device. As described in the table, the one-way communications 14 are more suitable when the receiver (content receiving device) could be located far from the transmitter. The one-way communications 14 are also more suitable when multiple receivers would simultaneously receive data. For reliable communications, the two-way communications 15 are more suitable. The two-way communications 15 are also more suitable when the use wants to send communications data to a specific recipient.

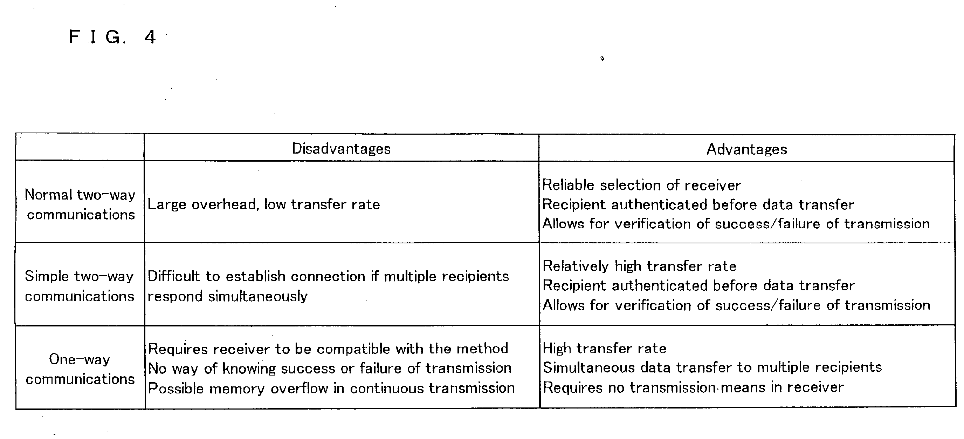

Figure 4 shows advantages and disadvantages of the communications schemes. The two-way communications 15 could be either normal two-way communications 15a or simple two-way communications 15b in the present embodiment. The simple two-way communications 15b skip the exchange of various information that is needed in the normal two-way communications 15a to transfer communications data. Details will be given later.

As listed in Figure 4, the normal two-way communications 15a have the following advantages: a reliable receiver is selectable; the recipient can be authenticated before data transfer; and success and failure of transmission can be verified. The normal two-way communications 15a are disadvantageous in its large communications overhead, hence low transfer rate.

Meanwhile, the simple two-way communications 15b have the following advantages: relatively high speed communications are possible; the recipient can be authenticated before data transfer; and success and failure of transmission can be verified. The simple two-way communications 15b are disadvantageous in that if multiple recipients simultaneously respond (returns a response), a connection is difficult to establish.

The one-way communications 14 have the following advantages: high speed communications are possible; data can be sent to multiple recipients simultaneously; and the receiver requires no transmission means. The one-way communications 14 are disadvantageous in that: the recipient needs to be compatible with the one-way communications 14; the transmitter has no way of knowing success or failure of transmission; and the receiver's memory could exceed its capacity (overflow) in continuous transmission.

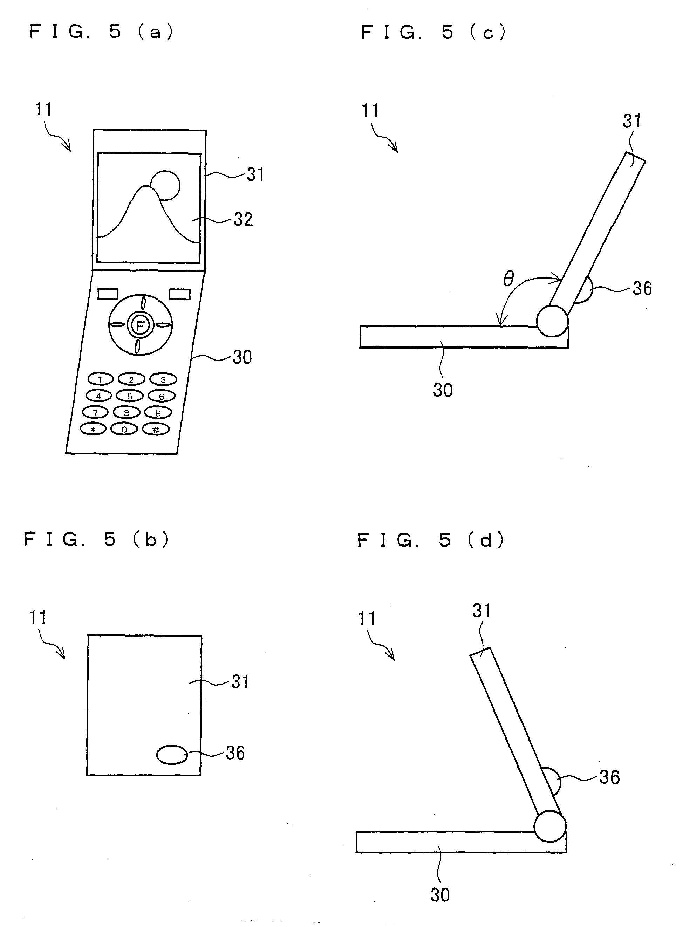

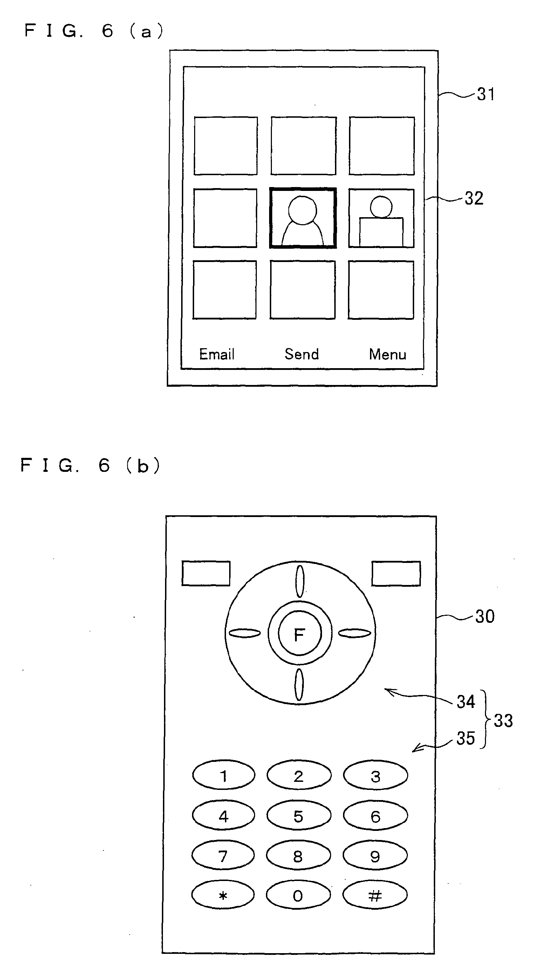

Figures 5(a) to 5(d), 6(a), 6(b) show the exterior of the mobile phone handset (content transmission device) 11. The mobile phone handset 11 of the present embodiment is foldable, or a so-called clamshell type. Figures 5(a), 5(c), 5(d) show the handset 11 when it is open.

Figure 5(a) shows the parts of the mobile phone handset 1 which go inside the clamshell when closed. It is these parts that are primarily used by the user when the mobile phone handset 11 is open. Accordingly, the side shown in Figure 5(a) is designated the front in the present application. Figure 5(b) shows the parts of the mobile phone handset 11 which go outside the clamshell when closed. It is these parts that are positioned opposite to the parts shown in Figure 5(a) when the mobile phone handset 11 is opened. Accordingly, the side shown in Figure 5(b) is designated the back in the present application. Figure 6(a) shows the front side of a lid 31, and Figure 6(b) the front side of a main body 30.

Referring to Figures 5(a) to 5(d), the mobile phone handset 11 is made up of the main body 30 and the lid 31. The main body 30 and the lid 31 are coupled like a hinge. As illustrated in Figures 5(a) and 6(a), the lid 31 is provided on its front with a display screen 32. Various displays are produced on the screen 32. The lid 31 is also provided therein with a mobile phone antenna (not shown). The lid 31 may have on its back a subscreen which has a smaller display size than the display screen 32.

As illustrated in Figures 5(a) and 6(b), the main body 30 has on its front a main operation button group 33. The main operation button group 33 includes a function button group 34 and a input button group 35. The function button group 34 enables various settings and function switching on the mobile phone handset 11. The input button group 35 enables input of numbers, letters, and other characters. Specifically, the function button group 34 includes: a power supply button to turn on/off power supply to the mobile phone; an email button to enter email mode; a cross button to move a selected object up/down or to the right/left; and an enter button, located at the center of the cross button, to enter a selection. The input button group 35 is a group of numeric keys. The main body 30 may have on its back a camera 9.

In the present embodiment, the lid 31 is provided on its back with a transmission section (light emitting means) 36 to perform infrared communications as shown in Figures 5(b), 5(c), 5(d). There may be provided a receiving section at the same position.

When one wants to run a slide show by sequentially transferring images from a digital camera or a mobile phone handset to a display device, he/she usually places the digital camera or the mobile phone handset on a desk, for example, during the transfer because the transfer takes time. Under the circumstances, the transmitter preferably includes a mechanism which adjusts the direction of emitted light because the emitted light needs to reach the light receiving section of the receiver to perform optical communications.

The user operates a conventional mobile phone handset while looking at the display screen. For that purpose, the user opens the mobile phone handset 11 and fixes the main body 30 and the lid 31 relative to each other at an angle θ of 120° or greater using a publicly known angle fixing mechanism (angle fixing means) as illustrated in Figure 5(c). Meanwhile, the mobile phone handset 11 is preferably placed on a desk once the slide show is started. In addition, the images are displayed on the display screen of the display device; the display screen 32 of the mobile phone handset 11 may be hidden from the user.

On the mobile phone handset 11 and other like mobile devices, the angle of spread of emitted infrared light is typically ±15° from the direction of emission. The transmitter has to be pointed at the light receiving section (receiver) of the display device. Therefore, preferably, the main body 30 and the lid 31 can be fixed at an angle θ of 120° or smaller.

A typical low-height table is about 40-cm high. A 37-in. television receiver will be placed on a television stand which is about 50-cm high. The television receiver itself will have supporting legs of about 15-cm long. If the mobile phone handset 11 is placed on the low-height table, the transmitter must look "up" to correctly face the television receiver. Thus, preferably, the main body 30 and the lid 31 can be fixed even at an angle θ of 90° or smaller as illustrated in Figure 5(d).

Furthermore, taking the angle of spread of the infrared into consideration, for example, if the angle θ is 90°, the direction of emission of the infrared is in a plane parallel to the top plate of the low-height table (usually, horizontal plane); the light emitted at below the plane is wasted. If the angle θ is 0°, the direction of emission of the infrared is normal (usually, vertical) to the top plate of the low-height table; the light emitted away from the television receiver is wasted. Therefore, the main body 30 and the lid 31 are especially preferably fixed at an angle θ of 15° to 75°, inclusive.

When the receiving section is mounted to a television receiver, the user often points the remote controller, etc. at a lower part of the television receiver; the light receiving section is preferably mounted to a lower part of the television receiver. An LED or like indicator (reception status indication means) may be mounted to the television receiver, for example, to indicate a successful or failed reception. The indicator, if any, is preferably disposed side by side with the receiving section because the user frequently aims the transmitter at the indicator.

In this context, the side-by-side disposition refers to the indicator being separated from the receiving section by a distance no greater than about a quarter of a dimension of the television monitor both horizontally and vertically. A 45-in. television receiver, for example, is about 1-meter wide. If the receiving section is disposed to the far-right or far-left of the television receiver, and the indicator to the other end, the mobile phone handset 11, pointed at the indicator, will likely suffer from communications errors. If the receiver is as low as 20 cm or even lower, as is the case with the video recorder, the light receiving section may be disposed at any height, whereas widthwise, the light receiving section is preferably disposed side by side with the indicator, or separated by a distance no greater than about a quarter of the width of the device, similarly to the previous case.

Most digital cameras are not foldable. The light transmission section of such a digital camera is also preferably provided with an adjusting mechanism (emission direction adjusting means) which enables an upward/ downward tilt of about ±30° with respect to a horizontal direction when the device is placed on the horizontal plane. The orientation in the horizontal plane is adjustable by turning around the main body of the mobile phone handset/digital camera.

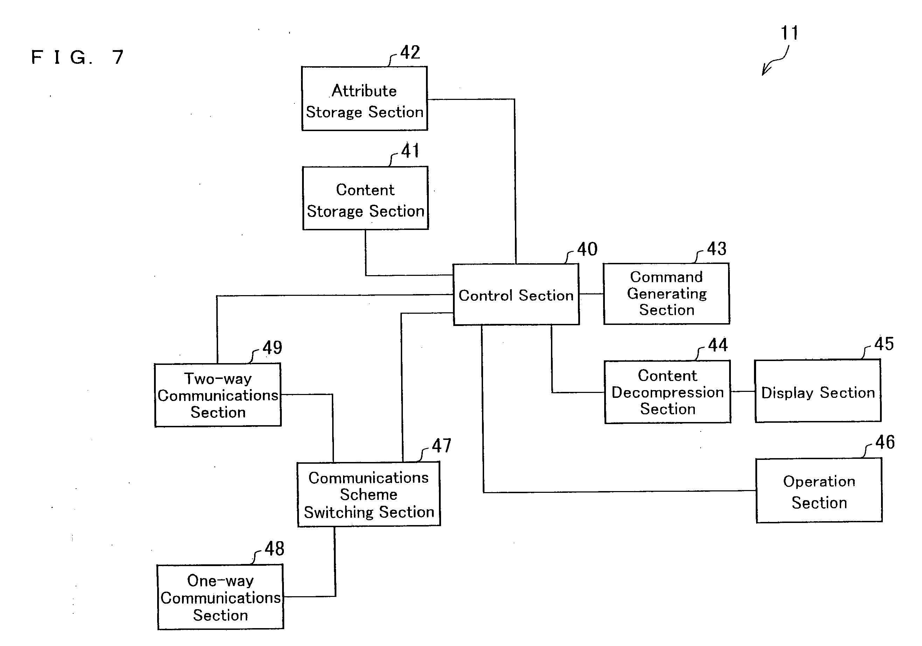

Figure 7 is a schematic of the content transmission device 11. As illustrated in the figure, the content transmission device 11 includes a control section (selection means, content selection means, data transmission means) 40, a content storage section (content storage means) 41, an attribute storage section 42, a command generating section 43, a content decompression section 44, a display section (notification means, thumbnail display means) 45, an operation section (operation means) 46, a communications scheme switching section 47, a one-way communications section (data transmission means, one-way communications means) 48, and a two-way communications section (data transmission means, two-way communications means, data receiving means) 49.

The control section 40 controls the overall operation of various components of the content transmission device 11. The control section 40 realizes its functions by a CPU (central processing unit) executing computer programs stored in a storage device, such as a RAM or flash memory.

The content storage section 41 stores content and is constructed of a flash memory or other rewriteable non-volatile memory. Examples of the content include still images, movies, music, office documents, and other multimedia data.

The attribute storage section 42 stores attribute information for the content stored in the content storage section 41 and is constructed of a flash memory or other rewriteable non-volatile memory. Examples of the content attribute information include the name of the content, the name and format of the file for the content, a data size, an image size, the date and time of download, the date and time of creation, the date and time of filming, the duration of recording, the duration of filming, the site of filming, user comments, and an orientation.

The content storage section 41 and the attribute storage section 42 may be constructed of the same memory. A piece of content and its attribute information may be recorded as a single file in the storage section. An example of such a file format is Exif (Exchangeable Image File Format), an image storage format for digital cameras. In the following, content attribute information will be simply referred to as attribute information.

The command generating section 43 generates commands through which to control the content receiving devices 12, 13.

The content decompression section 44 decompresses display data contained in content. For example, the content decompression section 44 decompresses still image data, compressed in JPEG (Joint Photographic Experts Group) format, which is stored in the content storage section 41. The decompressed data is sent to the display section 45.

The display section 45 displays images according to the data supplied by the content decompression section 44. Specifically, the display section 45 includes a display element, such as an LCD, a PDP (Plasma Display Panel), or an EL display, and a driver circuit which drives the display element according to the incoming image data.

The operation section 46, in response to manipulation by the user of the main operation button group 33 (see Figures 6(a), 6(b)) or other input devices provided on the mobile phone handset 11, generates manipulation data and pass them to the control section 40. The input device may be a touch panel, apart from the button switches.

The communications scheme switching section 47 selects a communications scheme from the one-way communications 14, the normal two-way communications 15a, and the simple two-way communications 15b according to an instruction from the control section 40. The communications scheme switching section 47 notifies the one-way communications section 48 and the two-way communications section 49 of the result of the selection.

The one-way communications section 48 carries out the one-way communications 14 according to the notification from the communications scheme switching section 47 and includes, among others, a wireless processing circuit and a light emitting element. Specifically, the one-way communications section 48 converts the content supplied by the control section 40 into suitable packets for infrared communications and externally emits the converted communications data in the form of light signals.

The two-way communications section 49 carries out the normal or simple two-way communications 15a, 15b according to the notification from the communications scheme switching section 47. Specifically, the two-way communications section 49 converts the content supplied by the control section 40 into suitable packets for infrared communications and externally emits the resultant packets in the form of light signals. At the same time, the two-way communications section 49 exchanges various data required for the communications with the destinations, or the content receiving devices 12, 13.

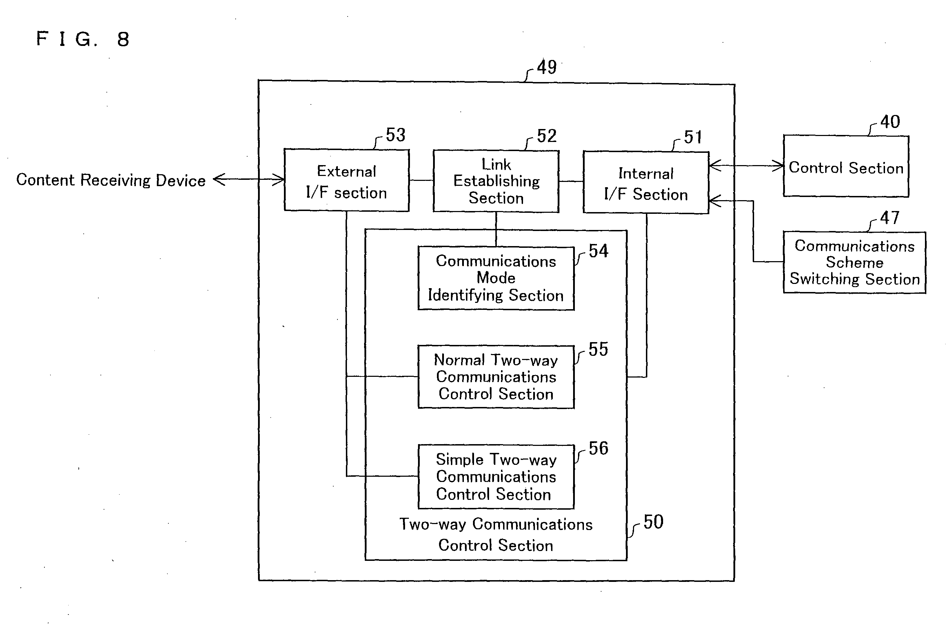

Figure 8 is a schematic of the two-way communications section 49. As illustrated in the figure, The two-way communications section 49 includes a two-way communications control section 50, an internal I/F (interface) section 51, a link establishing section 52, and an external I/F section 53.

The two-way communications control section 50 controls the overall operation of various components of the two-way communications section 49. The two-way communications control section 50 realizes its functions by CPU executing computer programs stored in a storage device, such as a RAM or flash memory. The two-way communications control section 50 will be detailed later.

The internal I/F section 51 transmits/receives signals to/from the control section 40 and the communications scheme switching section 47 in the content transmission device 11.

The link establishing section 52 establishes a link to the content receiving devices 12, 13. Establishing a link often involves discovery, responding, negotiation of transfer rate, etc.

The external I/F section 53 extremely transmits/receives infrared signals according to an instruction from the two-way communications control section 50. Specifically, the external I/F section 53 converts the electrical signals received from the control section 40 via the internal I / F section 51 and the link establishing section 52 into infrared signals and externally transmits the infrared signal. The external I/F section 53 also converts externally received infrared signals to electrical signals and transmits the electrical signals to the control section 40 via the link establishing section 52 and the internal I/F section 51. The external I/F section 53 includes a signal processing circuit, a light emitting element, and a light receiving element.

Now, the two-way communications control section 50 is described in detail. As illustrated in Figure 8, the two-way communications control section 50 includes a communications mode identifying section 54, an normal two-way communications control section (normal two-way communications means) 55, and a simple two-way communications control section (simple two-way communications means) 56.

The communications mode identifying section 54 identifies the communications mode of the link established by the link establishing section 52. The communications mode identifying section 54 notifies the control section 40 of the communications mode as it is identified, through the internal I / F section 51.

The normal two-way communications control section 55 controls the external I/F section 52 according to instructions from the control section 40 to carry out the normal two-way communications 15a. The simple two-way communications control section 56 controls the external I / F section 52 according to instructions from the control section 40 to carry out the simple two-way communications 15b.

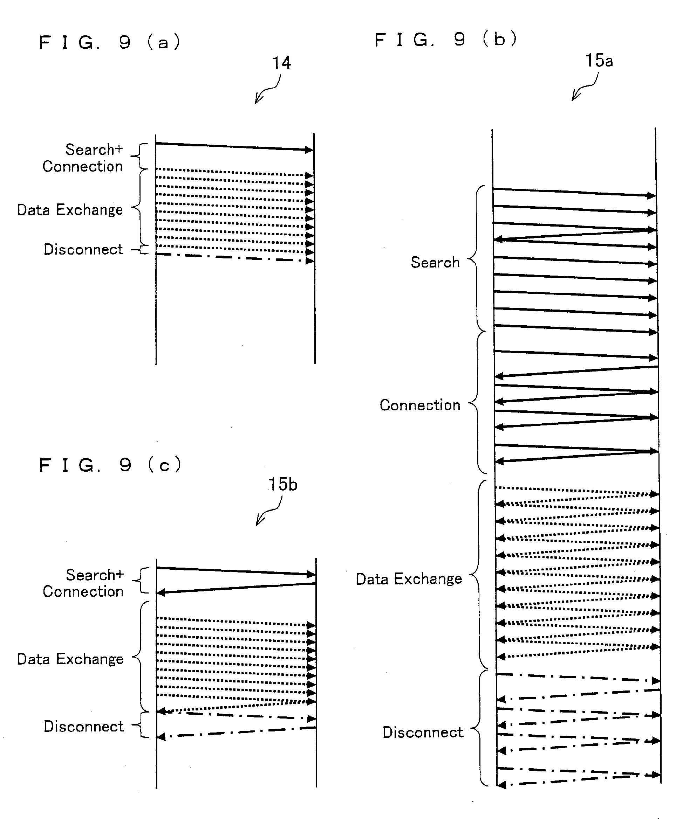

Figures 9(a) to 9(c) are sequence diagrams showing signal flows in the one-way communications 14, the normal two-way communications 15a, and the simple two-way communications 15b respectively. In the illustration, the device requesting a connection (content transmission device 11) appears in the left, and the devices accepting the connection request (content receiving devices 12, 13) appear in the right. The device requesting a connection transmits communications data in the figures; this is not always the case with the one-way communications 14.

Basic procedures for data communications are searching for an opposite end (search), connecting to the opposite end (connection), exchanging data with the opposite end (data exchange), and disconnecting from the opposite end (disconnection). In the present embodiment, the data exchange involves the transmission of communications data containing content only from a transmission end to a receiving end and will therefore be referred to as the data transmission.

The one-way communications 14 realize the search, connection, data transmission, and disconnection by means of one-way communications as illustrated in Figure 9(a). The one-way communications 14 hence achieve a faster transfer rate than the two-way communications 15 and enable the multiple content receiving devices 12, 13 to simultaneously receive communications data. The one-way communications 14 in the present embodiment transmit frames of the same structure as the simple two-way communications 15b. Therefore, the procedures in the one-way communications 14 are given the same names as in the two-way communications 15.

In contrast, the two-way communications 15 realize the search, connection, data transmission, and disconnection by means of two-way communications as illustrated in Figures 9(b), 9(c). Among the procedures, the search and the connection are implemented independently in the normal two-way communications 15a shown in Figure 9(b), but simultaneously in the simple two-way communications 15b shown in Figure 9(c). The simple two-way communications 15b simplify the search and connection procedures in this manner, thereby reducing the time taken before starting the transmission of the communications data.

Specifically, according to the normal two-way communications 15a, the content transmission device 11 makes an inquiry in the search to find out if there are any devices connectable to the device 11. If the device 11 receives a response from multiple devices, the device 11 can specify a particular recipient in the next connection procedure before establishing a connection. For example, if three devices having respective IDs (identifiers) A1, A2, and A3 respond in the search, the device 11 may select device A2, establish a connection, and start transmission.

In contrast, according to simple two-way communications 15b, the device 11 simultaneously searches for and connects to another device. The other device, after responding to the search, receives the communications data without sending a confirmation of the connection. Therefore, the other device has to be ready to receive the communications data once it returns a response in the search.

In some cases, multiple devices return a response in the search. In those cases, some response schemes are available: the responding devices returns a response after waiting for a random length of time ("random back-off") or for a fixed length of time ("fixed time scheme"). Collisions are less likely, and the waiting time is shorter in random back-off. In fixed time scheme, collisions occur because of responses from multiple devices; however, if the device 11 receives a response only from one device, it can proceed immediately to a next procedure, achieving quick processing, Other schemes are also available.

An acknowledgement (Ack) is frequently returned throughout the transmission of entire data according to the normal two-way communications 15a as illustrated in Figure 9(b). Typically, the receiving end returns an acknowledgement to the transmission end every time the receiving end receives a 2- to 64-kilobyte block from the transmission end.

In contrast, according to the simple two-way communications 15b, the receiving end may return one response for the transmission of the entire data as illustrated in Figure 9(c). The receiving end may of course return an error response or a disconnect request if there has occurred an error during the transmission. If the communications data is as large as several megabytes, the receiving end may return an acknowledgement during the transmission. In these cases, one can effectively take advantage of the simple two-way communications 15b over the normal two-way communications 15a by returning an acknowledgement for each block of about 256 kilobytes.

Therefore, as far as data transmission is concerned, the normal two-way communications 15a enable reliable data communications by frequently returning an acknowledgement. On the other hand, the simple two-way communications 15b achieve a high net transfer rate because of the fewer acknowledgements involved.

As explained above, as far as connection and data transmission are concerned, the normal two-way communications 15a provide a more reliable communications scheme, whilst the simple two-way communications 15b provide a higher-speed communications scheme.

In the present embodiment, the transmitter and the receiver communicate with each other by infrared. In IrDA which is a set of infrared communications standards, one-way IrSimple is equivalent to the one-way communications 14 shown in Figure 9(a), IrDA Data is equivalent to the normal two-way communications 15a shown in Figure 9(b), and two-way IrSimple is equivalent to the simple two-way communications 15b shown in Figure 9(c).

Supposing that a 150-kilobyte file is to be sent through the physical layer with a transfer rate of 4 Mbps,

$$\text{Discovery (3 to 4 seconds)} + \text{Information Exchange for}$$
$$\text{Establish Link (1 to 2 seconds)} + \text{Data Communications (0.6}$$
$$\text{to 1.2 seconds)} = \text{Total of (4.6 to 7.2 seconds)}$$

according to IrDA Data.

In contrast, according to two-way IrSimple,

$$\text{Discovery and Information Exchange (0.1 seconds)} +$$
$$\text{Data Communications (0.31 to 0.35 seconds)} = \text{Total of (0.41}$$
$$\text{to 0.45 seconds)}$$

That means two-way IrSimple provides more than 10 times the transfer rate of IrDA Data.

IrDA Data is already implemented on many mobile phone handsets, personal computers, and like devices. The present embodiment employs IrDA Data as the normal two-way communications 15a to enjoy IrDA's highly reliable discovery and data communications and provide connectivity to many devices which are already in the market.

The one-way communications 14 differ vastly from the two-way communications 15 in receiver configuration. The one-way communications 14 do not require a transmitting function in the receiver, which allows for a simple receiver confirmation. If the receiver has implemented thereon only the one-way communications 14, the transmitter is preferably switchable between the one-way communications 14 and the two-way communications 15. When that is the case, the receiver can receive data even if the receiver is compatible only with either the one-way communications 14 or the two-way communications 15.

Figure 9(a) identifies the search and connection procedures as "Search + Connection" because the figure assumes that similar packets to those in Figure 9(c) are transmitted. In the current case, the packets for the one-way communications 14 differs from the packets for the simple two-way communications 15b in the "Search + Connection" request packet termed SNRM: the SNRM packet requests no response in the one-way communications 14 and requests a response in the simple two-way communications 15b. In addition, a broadcast address is usually used as the recipient's address (destination address) in the one-way communications 14. When that is the case, the device which has received an SNRM packet according to the one-way communications 14 may receive communications data regardless of the address of that device.

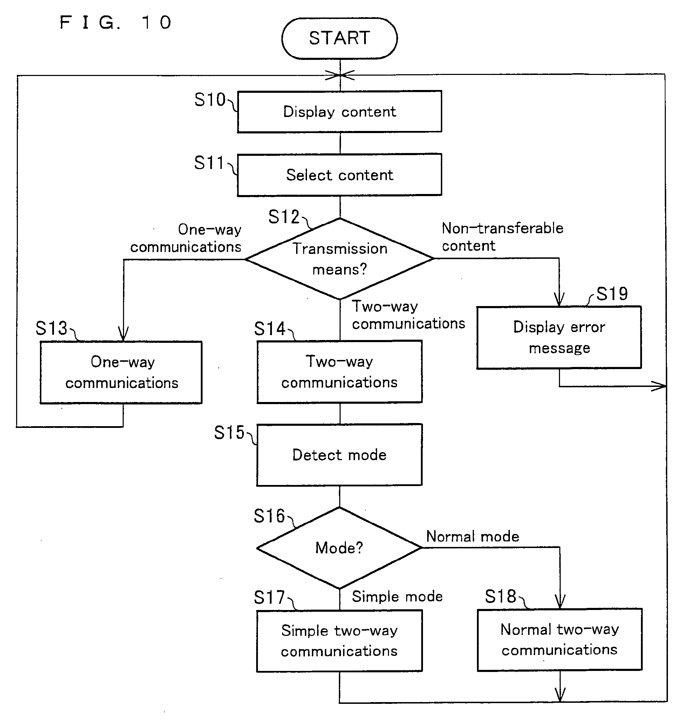

Figure 10 is a flow chart illustrating a flow of operation of the control section 40 of the content transmission device 11 configured as above. As illustrated in the figure, the display section 45 first displays thumbnails for plural pieces of content shown in Figure 6(a) under the control of the control section 40 (S10). Next, the control section 40 selects the content which corresponds to a thumbnail selected by the user manipulating the operation section 46 (S11). Figure 6(a) shows the user having selected the content corresponding to the thumbnail enclosed by a bold frame.

Next, the control section 40 determines whether a transmission is possible and selects transmission means for use if the transmission is possible (S12). For example, the content which is copyrighted and of which the transmission is prohibited is prohibited from being transmitted. In addition, the transmission means is selected, for example, by the user manipulating the operation section 46. The user presses a predetermined button in the input button group 35 to select the transmission means for use: for example, press "3" to select the one-way communications 14 and "6" to select the two-way communications 15. The transmission means may be selected according to content type (will be described in a separate embodiment).

If the one-way communications 14 are selected in step S12, the control section 40 controls the communications scheme switching section 47 to perform the one-way communications 14 for content transmission by the sequence shown in Figure 6(a) (S13). Thereafter, the operation returns to step S10 for a repetition.

On the other hand, if the two-way communications 15 are selected in step S12, the control section 40 controls the two-way communications control section 50 to start the two-way communications 15 (S14). Specifically, the section 40 implements the search sequence shown in Figure 9(b) (search) and the search sequence shown in Figure 9(c) (search + connection).

Any implementation ratio may be selected for the sequences: for example, the search shown in Figure 9(c) is implemented twice, then the search shown in Figure 9(b) is implemented once, a short interval is subsequently taken, and the process is repeated. Before starting the sequence, a step may be implemented to check out whether or not there is another device being communicating (listen before talk).

Next, the control section 40 learns about the current mode, either the normal mode (normal two-way communications 15a) or the simple mode (simple two-way communications 15b), from the communications mode identifying section 54 of the two-way communications section 49 (S15). The information is passed onto the upper application. The application may inform the user of the current communications mode if necessary.

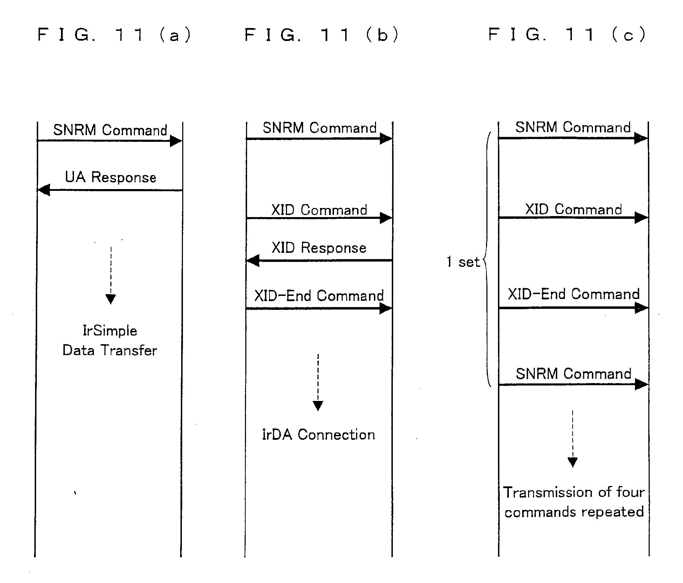

Next, the control section 40 identifies the current mode through negotiation with the opposite end (S16). Figures 11(a) to 11(c) demonstrate concrete examples of mode identification.

Figures 11(a) to 11(c) depict a switching process between IrDA (normal two-way communications 15a) and two-way IrSimple (simple two-way communications 15b) as sequence diagrams. According to IrSimple, an SNRM command is sent as a connect request to the opposite end as shown in Figure 11(a). This is the first packet in the connection (search + connection) shown in Figure 9(c). If a response (UA response) is returned for the SNRM command as illustrated in Figure 11 (a), two-way IrSimple is selected, and the data communications shown in Figure 9(c) are executed (S17). Thereafter, the operation returns to step S 10 for a repetition.

On the other hand, if no response is returned for the SNRM command as illustrated in Figure 11 (b), an XID command (opposite-end discovery command) is subsequently transmitted. If a response (XID response) is returned for the XID command, the section 40 determines that the opposite end is compatible with IrDA, carries out a connection process (connection) according to the IrDA connect sequence, and then carries out data communications according to IrDA as illustrated in Figure 9(b) (S18). Thereafter, the operation returns to step S10 for a repetition.

Meanwhile, if no response from the opposite end is returned for the XID command as illustrated in Figure 11 (c), the section 40 sends a second SNRM command to connect according to IrSimple. If a response is returned for the second SNRM command, the section 40 completes the connect according to IrSimple and carries out data communications according to IrSimple as explained earlier. Thereafter, the section 40 repeats a connection process (sequential transmission of a set of an SNRM command, an XID command, an XID-End command, and another SNRM command) until it receives a response or a predetermined period runs out.

If there is no opposite end, that is, if no response is returned for the SNRM command and the XID command, the section 40 stops the connection process, controls the display section 45 to display an error message (e.g., "No receiver found"), and ends the operation.

The present embodiment gives priority to IrSimple because of its high speed communications capability. Specifically, the section 40 attempts to connect first according to IrSimple and then according to the other mode. However, the communications scheme may be decided by negotiation after the discover of an opposite station, depending on protocols.

On the other hand, if it is determined in step S12 that the content selected by the user is prohibited from transmission, the section 40 controls the display section 45 to display an error message (e.g., "You are allowed to transmit this content") (S19). The error display is not essential. The user may be prohibited in step S11 from selecting the content of which transmission is prohibited. After step S19, the operation returns to step S10 for a repetition.

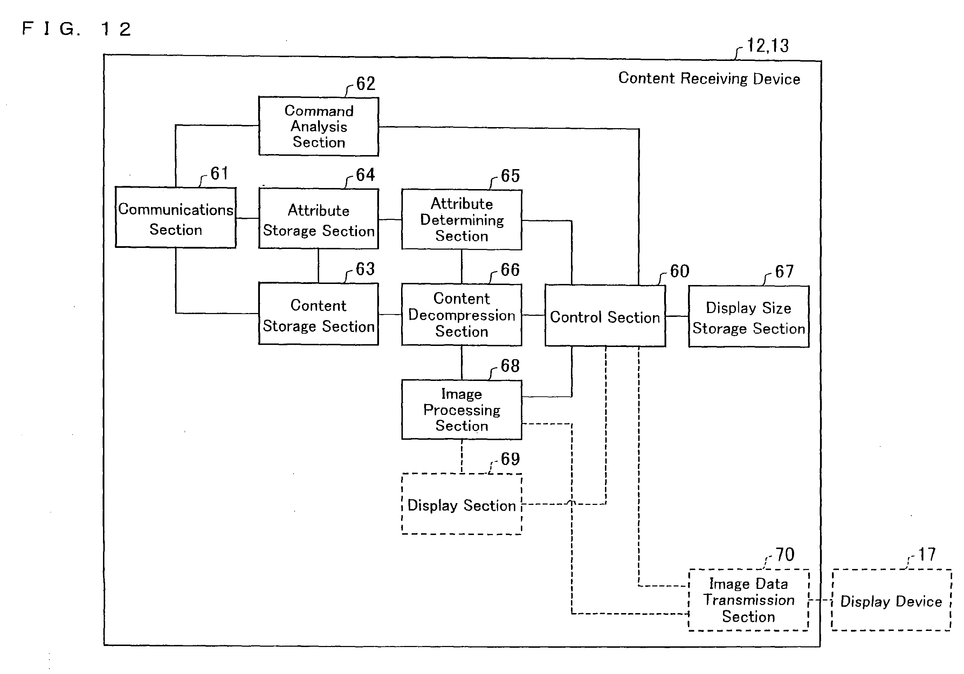

Figure 12 is a schematic of the content receiving devices 12, 13. As illustrated in the figure, the content receiving devices 12, 13 include a control section (data reception restriction means) 60, a communications section (data receiving means) 61, a command analysis section (command obtaining means) 62, a content storage section (content storage means) 63, an attribute storage section 64, an attribute determining section (image size obtaining means) 65, a content decompression section (decompression means) 66, a display size storage section (display size storage means) 67, and an image processing section (scaling means) 68. The content receiving device 13, having an image display function, includes a display section (output means, display means) 69. In contrast, the content receiving device 12, having no image display function, includes an image data transmission section (output means, transmission means) 70 transmitting image data to the display device 17. The display section 69 may have not only the function of displaying received images on the display device, but also a function of printing the received images.

The control section 60 controls the overall operation of various components of the content receiving devices 12, 13. The control section 60 realizes its functions by CPU executing computer programs stored in a storage device, such as a RAM or flash memory.

In the present embodiment, the control section 60 determines the size of an image to be displayed from the image size, determined by the attribute determining section 65, found in the attribute information and the display size of the screen of the display section 69 or the display device 17 being stored in the display size storage section 67. The section 60 also controls the image processing section 68 to scale the image up or down to the determined size. The attribute information may contain orientation information of filming. Therefore, the control section 60 may control the image processing section 68 to determine a rotation angle for the image to be displayed according to the orientation information and rotate the image to the determined rotation angle. The content image size and the display image size will be detailed later.

The communications section 61 communicates with the content transmission device 11. The communications section 61 only needs to be capable of at least of the three communications schemes: the one-way communications 14, the normal two-way communications 15a, and the simple two-way communications 15b. A communications section may be present which receives a command using an infrared remote controller for a simple household electrical appliance.

If the section 61 is capable of multiple communications schemes, the section 61 only needs to have a similar configuration to the communications scheme switching section 47, the one-way communications section 48, and the two-way communications section 49 in Figure 7. If the section 61 is capable of multiple communications schemes, the section 61 preferably automatically identifies a communications scheme according to information contained in a packet. When that is the case, by no matter which communications scheme the content transmission device 11 transmits communications data, the communications section 61 dynamically identifies the communications scheme and adjust itself so that it can receive the communications data.

The communications section 61 processes the communications data supplied from the content transmission device 11 and separates the data into a command, content, and attribute information for output to the command analysis section 62, the content storage section 63, and the attribute storage section 64 respectively.

For example, the Exif format places content and its attribute information in a single file. Therefore, the section 61 can readily separate content from its attribute information if the section 61 receives communications data in such a format from the content transmission device 11. This format employs JPEG or a similar popular method to compress content (image data) itself.

Some formats define how content and its attribute information must be stored; some formats do not specify how to store commands. When that is the case, the content should contain "rotate" or like text information as a command, instead of image data, and communications data is sent with a specific file name, such as "IrSimple.cmd." The communications section 61 determines from the file name that the information contained in the content is a command and sends the content to the command analysis section 62. That prevents resources from being wasted by storing the content containing the command in the content storage section 63.

The content may contain only one command or two or more commands. The command may be a scale-up ratio, scale-down ratio, rotation angle, or other parameters. For example, the command may be a parameter like "expansion 120%" (enlarge to ratio 120%), "reduce 0.8" (shrink to ratio 0.8), or "rotate 180°" (rotate by 180°). Alternatively, the command may be given by binary code containing command code and numeric value parameters, rather than by character code.

The command may be contained in the file name. When that is the case, the communications section 61 sends the file name, rather than the contents of the file, to the command analysis section 62. For example, if the file name is "IrSimple_rotate 180.cmd" the communications section 61 sends the file name to the command analysis section 62 which derives a "Rotate by 180°" command from the received file name. This arrangement enables transmission of communications data containing both content and command.

A progress bar, indicating the progress of the reception, may be displayed on the display section 69 during the reception of the content. In that case, the progress bar is displayed every time content containing a command is received, which may be annoying to the user. Accordingly, the control section 60 preferably controls so that the display section 69 does not display the progress bar until the communications section 61 determines whether the content contains a command.

If a file is not completely received due to a reception error during the reception of a file containing a command, it is difficult to process the command contained in the file. Furthermore, for example, if the contents of the command contain an error or a parameter in the command exceeds limits, it is impossible to process the command.

Accordingly, if the command is not properly received or the received command contains an error, the display section 69 may continue to display the image it was displaying when the file containing the command was received or the image it was displaying immediately before that. Alternatively, the display section 69 may display an error message to alert the user. If the communications section 61 has received a file containing a command while the display section 69 is displaying something other than images, such as the error message, the command may be processed or ignored so as not to disrupt the display of the error message.

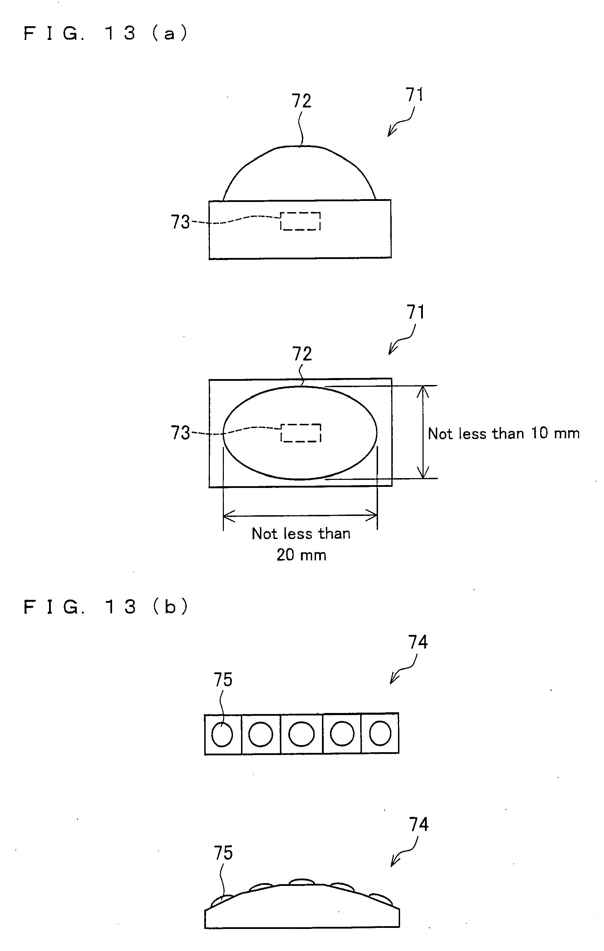

In the present embodiment, the content receiving devices 12, 13 receive content from the content transmission device 11 by infrared. For this purpose, the communications section 61 needs to include at least a light detector detecting external infrared signal. Figures 13(a), 13(b) show an exemplary light detector, provided in the television receiver 18 (content receiving device 12), which is intended for use as it is illustrated in Figure 2. As mentioned earlier, the light detector provided in the television receiver 18 is preferably capable of receiving infrared light when the receiver 18 is placed in a horizontal plane extending about ±45° off the normal to the screen of the television receiver 18. Therefore, the light detector is preferably of a shape elongated in a direction vertical (this direction will be, hereinafter, referred to as the "latitudinal direction") to the normal in a horizontal plane as shown in Figures 13(a), 13(b).

The light detector (light detection means) 71 shown in Figure 13(a) includes a collective lens 72 and a single light receiving element 73. A typical lens with a single focal point collects incident light parallel to the optical axis of the lens and incident light at an angle to the optical axis to different points. The collective lens 72 therefore preferably has plural focal points so that the lens 72 can collect light traveling off the normal in the latitudinal direction to a suitable position.

The light detector 71 containing a single light receiving element is preferably about 20 mm long or even longer when measured in the latitudinal direction. Meanwhile, in the vertical direction, the viewing angle usually does not have to be as large as 90° (which is the case for the latitudinal direction). Accordingly, the light detector 71 for use with the television receiver 18 is preferably at least 10 mm long in the vertical direction and longer than that in the latitudinal direction.

The light detector (light detection means) 74 shown in Figure 13(b) has five ordinary IrDA light detectors 75 arranged in the latitudinal direction. Each ordinary IrDA light detector 75 has a light receiving angle of about ±15° (total of 30°). A simple calculation shows that three of the detectors 75 would sufficiently provide a light receiving angle of ±45° (total of 90°). Considering variations of characteristics between elements and irregularities in assembly, however, there are preferably provided about four to six detectors 75.

Current models of the mobile phone handset and other mobile device (content transmission device 11) are equipped with a light emitting element (100 mW/sr [steradian]; communications distance of about 1 meter) which complies with the IrDA standards (4 Mbps). Meanwhile, as illustrated in Figure 2, the communications distance between the content transmission device 11 and the content receiving devices 12, 13 is required to be at least about 2 meters. Due to that requirement the light detectors 71, 74 in Figures 13(a), 13(b) are capable of detecting weak infrared light.

The command analysis section 62 analyzes a command transferred from the communications section 61. The command analysis section 62 informs the control section 60 of the result of the analysis.

The content storage section 63 stores the content transferred from the communications section 61. The attribute storage section 64 stores the attribute information transferred from the communications section 61.

The content storage section 63 and the attribute storage section 64 are constructed of a flash memory, a HDD (hard disk drive), a DVD (digital versatile disk), or other rewriteable non-volatile storage device. A storage device may be selected for use depending on the volume of the content to be stored, the required access time and other conditions. The content storage section 63 and the attribute storage section 64 may be constructed of the same storage device. Content and its attribute information may be recorded as a single file in the storage section as is the case with Exif format described above.

The attribute determining section 65 determines, from the file format, image size, and various other attribute information stored in the attribute storage section 64, how to process (e.g., reproduce) the content. The attribute determining section 65 informs the control section 60 and the content decompression section 66 of the result of the determination.

The content decompression section 66 decompresses compressed content according to the result of the determination supplied by the attribute determining section 65. The function is necessary because the content is generally provided in the form of a compressed file (e.g., JPEG, MP3 (MPEG-1 Audio Layer-III), MPEG (Moving Picture Experts Group)-2, ZIP, etc.) to relieve load on communications. The content decompression section 66 transfers the decompressed content to the image processing section 68.

The display size storage section 67 stores the size of the display pixels of the display section 69 or the display device 17 and is constructed of a flash memory or other storage device. In actual practice, software code is often set up to include information, such as 1920 wide x 1080 high, for use in the processing. The hardware controlling the content receiving devices 12, 13 is preferably capable of switching between a plurality of display sizes in response to external settings. This arrangement facilitates making changes according to size when content receiving devices 12, 13 are incorporated into display devices of different sizes.

The image processing section 68 carries out image processing on the content decompressed by the content decompression section 66. In this context, the image processing refers, for example, to rotating, enlarging, shrinking, translation, deforming, inverting, etc. of images. One of image processing techniques which realize the processing is Affine transformation. Affine transformation is a graphic conversion involving three basic transforms: translation, scaling, and rotation. The image processing section 68 sends the converted content as image data to the display section 69 or the image data transmission section 70.

When the image size of the content is as large as 8 megapixels, the decompressed content has a great data length. The image processing section 68 preferably scales down the content simultaneously with the decompression by the content decompression section 66, rather than after the content decompression section 66 fully decompresses the content. This arrangement keeps the image data size low and saves on the memory capacity for storing the image data.

The display section 69 displays images from the image data transferred from the image processing section 68. Specifically, the display section 69 includes a display element, such as an LCD, a PDP, or an EL display, and a driver circuit which drives the display element according to incoming image data.

The image data transmission section 70 transmits the image data transferred from the image processing section 68 to the display device 17. The transmission of the image data from the image data transmission section 70 to the display device 17 may be wireless as in a wireless LAN or wired as with a cable. Furthermore, when cables are used, analog signals may be transmitted; alternatively, digital signals may be transmitted according to DVI (Digital Visual Interface), HDMI (High-Definition Multimedia Interface), or a similar standard.

The content receiving devices 12, 13 is preferably capable of switching between display modes depending on the format of received content. For example, when the content receiving device is an LCD, the luminance of a backlight, color adjustment, and image quality adjustment are possibilities. There exist content receiving devices which are capable of switching between cinema, sports, game, and other modes by storing multiple settings of these adjustment values.

The content receiving devices 12, 13 can receive different types of files, including photographs, movies, emails, and documents. The settings above are preferably switchable between images (photographs, movies, etc.) and text-based documents and emails. For example, for photographs, contrast and luminosity are preferably high for improved sharpness; for text, however, high contrast and luminosity make characters difficult to read. Since image and text (e.g., JPEG and documents) can be distinguished from the attribute information of content (for example, the extension of the file), the settings may be switched depending on the attribute information.

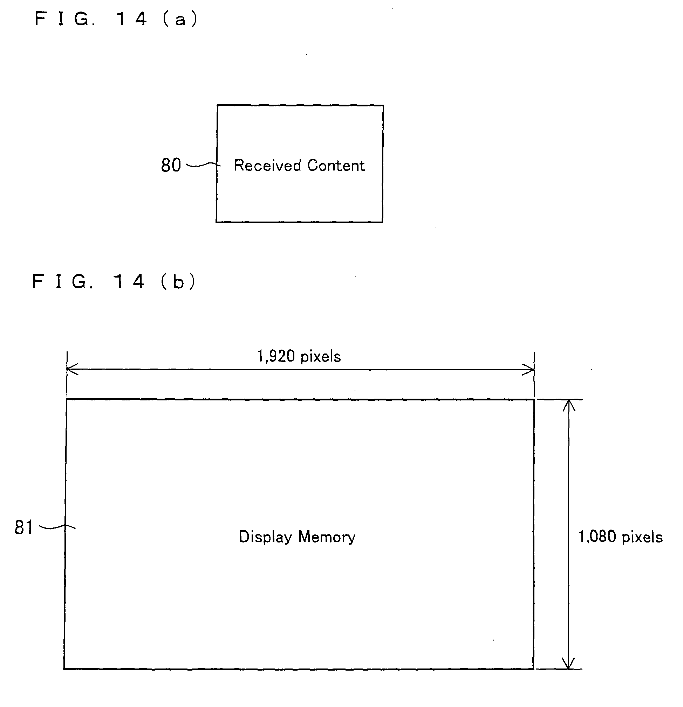

Next will be described in detail the image size of the content received by the content receiving devices 12, 13 (hereinafter, the "received content") and the image size of the content displayed on the display screen of the display section 69 or the display device 17 (hereinafter, the "display content") in reference to Figures 14(a) to 17(c). In the following, an image is scaled up/down while maintaining its aspect ratio.

Figures 14(a) and 14(b) show the image size of received content 80 and the size of an image on a display screen respectively. The image size of the content 80 in Figure 14(a) is not known until the content 80 is received. In contrast, the image size on a display screen in Figure 14(b) is generally equal to the size of one screen which can be decompressed in a display memory.

For example, the full size on a high vision television is 1920 x 1080 pixels (other image sizes are also available). There could be a case where the display device 17 has a maximum display resolution of 1920 x 1080 pixels, whereas the display memory can hold a maximum image size of 1366 x 768 pixels. In that case, the image is scaled up before being displayed on the display device 17.

Therefore, the image size of the display content (pixel count) is dictated by the maximum size of an image (pixel count) that the display memory can hold, irrespective of the maximum display resolution of the display section 69 or the display device 17. In the following, that maximum size of an image will be referred to as the image size of the display memory 81. Also, the following description is given in terms of the image size (pixel count) in the display memory.

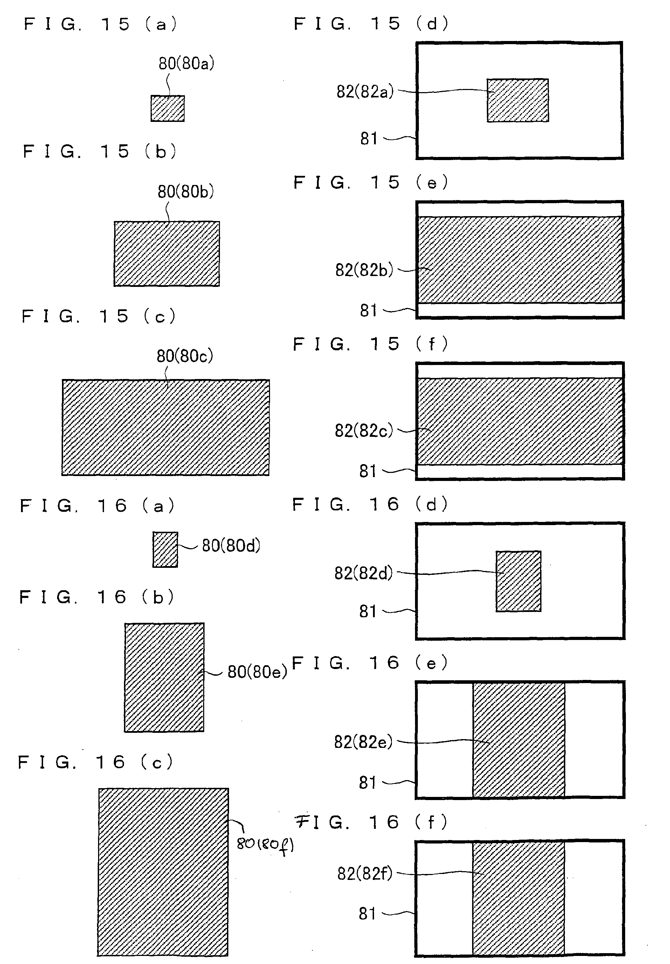

Figures 15(a) to 15(c) show the image size of received content. In the illustrated example, the image size of the received content 80 is longer in width than the image size of the display memory 81. Figures 15(d) to 15(f) show the image sizes of display content 82 which corresponds to the received content 80 shown in Figure s15(a) to 15(c) respectively. The image sizes of the display content 82 correspond to the display area of content displayed on a single screen. In the illustration, the cross-hatched region is the image area of the content.

Figure 15(a) shows a case where the image size of the received content 80a is smaller than a reference size. An example of the reference size is QVGA (Quarter Video Graphics Array) (landscape; 320 x 240 pixels).

If the display content 82 is a global scale-up of the received content 80a which fits in the display screen as illustrated in Figure 15(e), the scale-up ratio is so large that block noise becomes visible and the user visibility deteriorates. Accordingly, if the image size of the received content 80a is smaller than the reference size, the scale-up ratio for the image size of the display content 82a is preferably restricted as shown in Figure 15(d). The scale-up ratio is preferably restricted approximately to unity (the same dot count as in the original) to 4 (x 2 in height and x 2 in width).

Similarly, if the scale-down ratio is too large, that is, if the display content 82 is too small, the user visibility deteriorates. For example, if displayed content is smaller than a name card (9 cm x 5.5 cm), the contents of the content become difficult to recognize from the distance of 2 to 3 meters and beyond. Therefore, it is preferable if the scale-down ratio is restricted or a limit size may be set up for scale down display (for example, either side is more than or equal to 7 cm).

Figure 15(b) shows a case where the image size of the received content 80b is greater than or equal to the reference size and smaller than or equal to the image size of the display memory 81. In that case, the display content 82b is a scale-up of the received content 80b with as resultant large overall dimensions as possible as shown in Figure 15(e). Specifically, the display content 82b is such a scale-up of the received content 80b that the image size of the display content 82b in the horizontal direction matches the image size of the display memory 81 in the horizontal direction.

Figure 15(c) shows a case where the image size of the received content 80c is larger than the image size of the display memory 81. In that case, the display content 82c is a scale-down of the received content 80c with as resultant large overall dimensions as possible as shown in Figure 15(f). Specifically, the display content 82c is such a scale-down of the received content 80c that the image size of the display content 82c in the horizontal direction matches the image size of the display memory 81 in the horizontal direction.

Figures 16(a) to 16(c) show the image size of received content. In the illustrated example, the image size of the received content 80 is longer in height when compared to the image size of the display memory 81. Figures 16(d) to 16(f) show the image size of the display content 82 which correspond to the received content 80 shown in Figure 16 (a) to 16(c) respectively. The image sizes of display content 82 correspond to the display area of content displayed on a single screen. In the illustration, the cross-hatched region is the image area of the content.

Figure 16(a) shows a case where the image size of the received content 80d is smaller than a reference size. An example of the reference size is QVGA (portrait; 240 x 320 pixels). In that case, the scale-up ratio for the image size of the display content 82d is preferably restricted as shown in Figure 16(d) similarly to the case shown in Figure 15(a). The scale-up ratio is preferably restricted approximately to unity (the same dot count as in the original) to 4 (x 2 in height and x 2 in wide).

Figure 16(b) shows a case where the image size of the received content 80e is greater than or equal to the reference size and smaller than or equal to the image size of the display memory 81. In that case, the display content 82e is a scale-up of the received content 80e with as resultant large overall dimensions as possible as shown in Figure 16(e). Specifically, the display content 82e is such a scale-up of the received content 80e that the image size of the display content 82e in the vertical direction matches the image size of the display memory 81 in the vertical direction.

Figure 16(c) shows a case where the image size of the received content 80f is larger than the image size of the display memory 81. In that case, the display content 82f is a scale-down of the received content 80f with as resultant large overall dimensions as possible as shown in Figure 16(f). Specifically, the display content 82f is such a scale-down of the received content 80f that the image size of the display content 82f in the vertical direction matches the image size of the display memory 81 in the vertical direction.

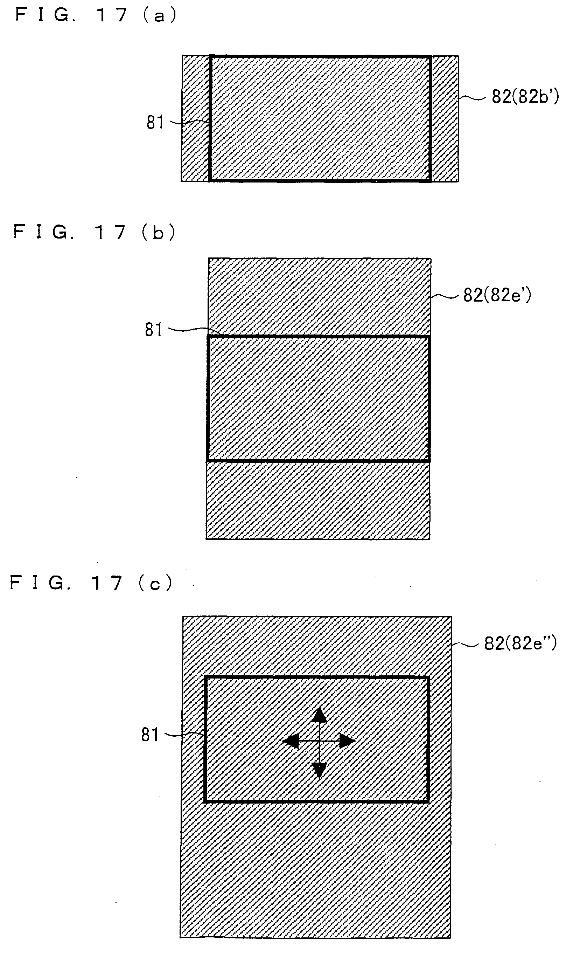

The display content 82b shown in Figure 15(e) can be further scaled up. Figure 17(a) shows a further scale-up of the display content 82b shown in Figure 15(e). In that case, the display content 82b' is such a scale-up of the display content 82b that the image size of the display content 82b' in the vertical direction matches the image size of the display memory 81 in the vertical direction as illustrated in Figure 17(a). Therefore, the display content 82b' on display extends beyond the size of the display memory 81 in the horizontal direction.

The display content 82b' shown in Figure 17(a) can be further scaled up. The scale-up ratio is preferably about 1.4 both in the horizontal and vertical directions with respect to the display content 82b shown in Figure 15(e) and 2 in terms of area.

Similarly, the display content 82e shown in Figure 16(e) can be further scaled up. Figure 17(b) shows a further scale-up of the display content 82e shown in Figure 16(e). In that case, the display content 82e' is such a scale-up of the display content 82e that the image size of the display content 82e' in the horizontal direction matches the image size of the display memory 81 in the horizontal direction as illustrated in Figure 17(b). Therefore, the display content 82e' shown in the figure extends beyond the size of the display memory 81 in the vertical direction.

The display content 82e' shown in Figure 17(b) can also be scaled up. The scale-up ratio is preferably about 1.4 both in the horizontal and vertical directions with respect to the display content 82e shown in Figure 16(e) and 2 in terms of area.

After this scaling up, the display content can be further scaled up at a similar ratio. The display content 82e" in that case is shown in Figure 17(c). The display content 82b', 82e', 82e" extends beyond the display screen in the case shown in Figures 17(a) to 17(c). Accordingly, the content transmission device 11 is preferably adapted to generate a command for output to the content receiving devices 12, 13 to move the display area for the display content 82b', 82e', 82e" according to the user operating the cross key in the function button group 34 (Figure 6(b)).

For example, High Vision in its full size is 1980 x 1080 pixels which is about 2 megapixels. In contrast, some commercially available digital cameras have 8 megapixels or even more. Therefore, content with far more pixels than the pixel count of the display screen would have to be received in some cases. In that case, even if the display content 82 extends beyond the display screen as shown in Figures 17(a) to 17(c), block noise is not hardly visible and visibility to the user is maintained.

Figures 17(a) to 17(c) illustrate further stepped scale-up of the display content 82b, 82e shown in Figures 15 (e) and 16(e). Similarly, the display content 82c, 82f shown in Figures 15(f) and 16(f) can be further scaled down stepwise.

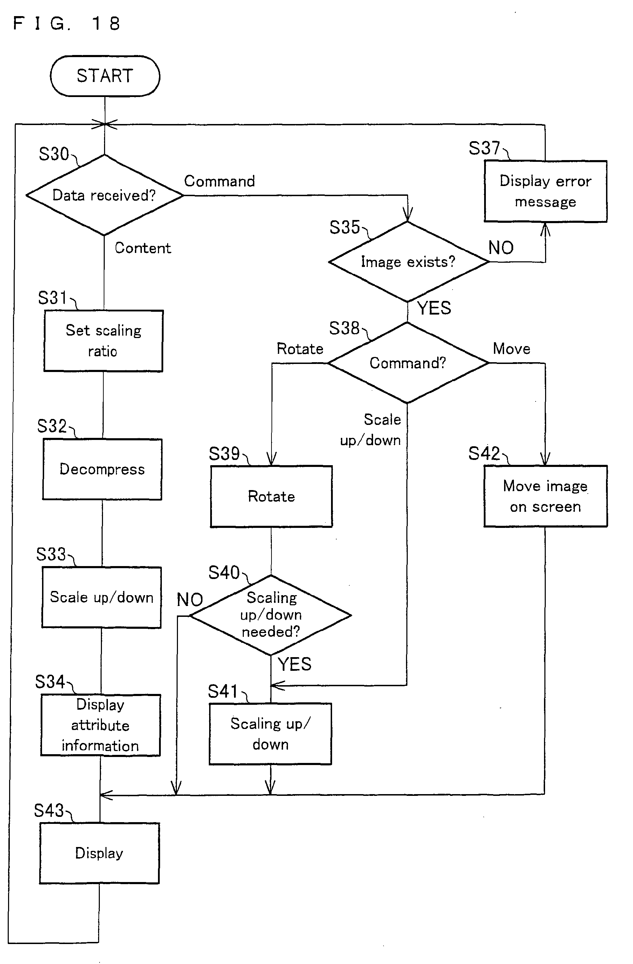

Next will be described the operation of the content receiving devices 12, 13 configured as above in reference to Figure 18. Figure 18 shows a flow of command processing as executed by the content receiving devices 12, 13. As illustrated in the figure, first, the communications section 61 receives communications data (S30).

If the received communications data represents content and is image data, the control section 60 sets a scaling ratio for the image (S31). The ratio is determined from the number of display dots of the display section 69 or the display device 17 and attribute information received. The attribute information is present as part of content as is the case with JPEG and MPEG image size; the attribute information may be received in any form. The image data may of course represent a still image or movie.

Next, the content decompression section 66 decompresses the content (S32). Even if the content is a presentation file or a document file for a personal computer, the section 66 decompresses the content similarly into an image.

Next, the image processing section 68 scales up or down the image so that the resultant image has the size set up in step S31 (S33) .

Next, the control section 60 transmits the information to the display section 69 or the image data transmission section 70 to display attribute information that is worth displaying (S34). The attribute information that is worth displaying includes, for example, a filming date and time, place of filming (the name of place of filming, postal code, the name of a nearest train station, latitude and longitude), user comments, title, cast, broadcast date and time, and a broadcast channel. This attribute information is usually written in a separate memory plane from images and combined with an image for display at the last stage. Any technique may be used to display the attribute information. Step S34 is followed by step 543.

On the other hand, if the received communications data represents a command in step S30, the control section 60 determines whether or not there exists content (image) already received (S35). If there exists no image which has been already received, the control section 60 instructs the display section 69 or the image data transmission section 70 to display an error message (S37). The error message may be displayed on the main screen of the display device 17 and the content receiving device 13 or displayed using a status display LED provided to the content receiving devices 12, 13. Thereafter, the operation returns to step S30, and the same operation as described so far is repeated.

On the other hand, if there exists in step S35 an image already received, the command analysis section 62 analyzes the received command to determines its type (S38) . The received command is for a rotation, the operation proceeds to step 539. If the command is for a scaling, the operation proceeds to step S41. If the command is for a movement of the image on screen, the operation proceeds to step S42.

In step S39, the image processing section 68 rotates the image. Next, the control section 60 determines whether or not the rotated image needs to be scaled up or down (S40). If not, the operation proceeds to step S43. If it does, the operation proceeds to step S40. For example, if the display content 82b shown in Figure 15(e) is rotated 90° without resizing, the resultant image extends beyond the display screen 81. Therefore, the display content 82b is preferably scaled down as with the display content 82f shown in Figure 16(f) so that the entire display content 82b is displayed.

In step 541, the image processing section 68 resizes the image. Thereafter, the operation proceeds to step S43.

In step 542, the image processing section 68 moves the image on screen. Thereafter, the operation proceeds to step S43. For example, if the display content 82e" is scaled up beyond the display screen as illustrated in Figure 17 (c), the image is preferably moved on screen in step S42 by the content transmission device 11 transmitting a display position move command in response to the user pressing an arrow key and the content receiving devices 12, 13 receiving the command.

In step S43, the display section 69 produces a display from the data received by the display section 69, or the display device 17 produces a display from data transferred from the image data transmission section 70. Thereafter, the operation returns to step S30, and the same operation as described so far is repeated.

There may be a step to receive commands for receiving and reproducing content and permitting or prohibiting printing apart from the rotate, scaling, and move commands. These commands are for special processes. A prohibit setting may prohibit commands other than the content receive, reproduce, print permit commands, and a content receiving process, regardless of whether or not the content already exists.

When an AV recorder which receives and records television broadcast or like broadcast signals is used as the content receiving device 12, for example, there often exist channel adjustment to the frequency channels of broadcast signals and input switching between a channel input and an input from an external device. Therefore, the content receiving device 12 of the present embodiment is preferably switchable between content receive mode and display mode by an input switch command. This enables the user to recognize wireless content receipt/ display function as one of external inputs. In this case, the communications section 61, the command analysis section 62, etc. shown in Figure 12 are preferably activated correspondingly to switching between content receipt/ display mode.

Furthermore, the structure shown in Figure 12 is preferably either partly or entirely switched to power save mode or powered off in response to switching to another input or channel. Accordingly, power consumption can be reduced during ordinary broadcast receipt or while using another input.

As described in the foregoing, the content transmission device 11 of the present embodiment allows the user to select the one-way communications 14 or the two-way communications 15 for the transmission of content. The user can therefore transmit the content by a communications scheme he/ she likes.


Embodiment 2


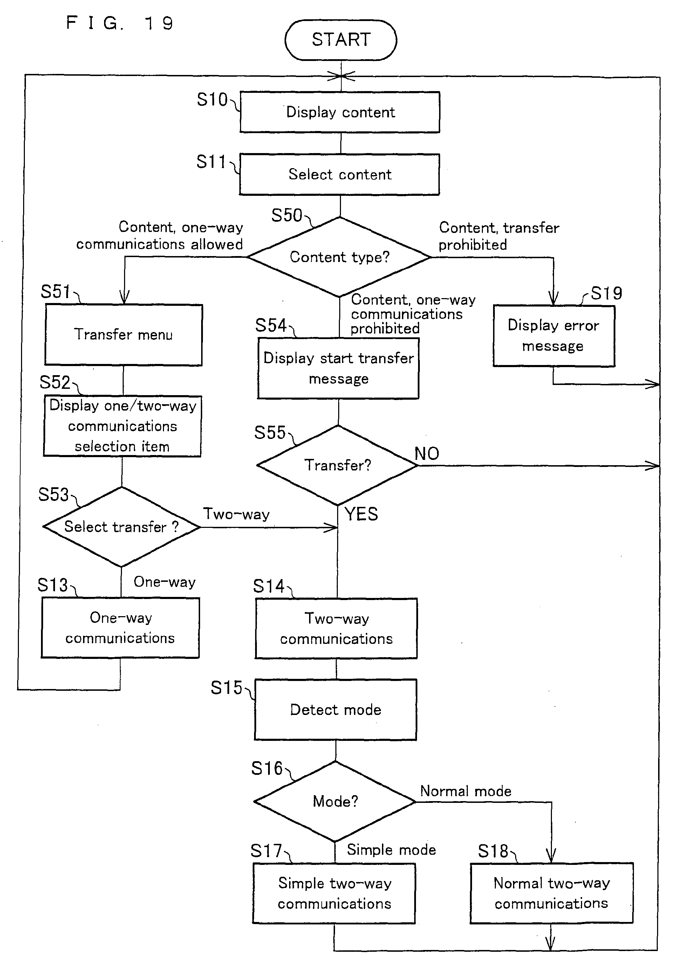

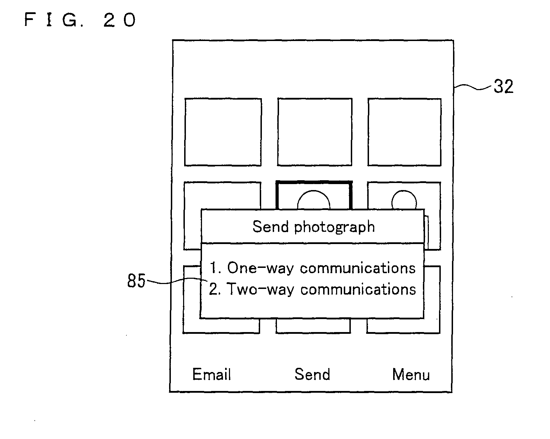

Next will be described another embodiment of the present invention in reference to Figures 19 and 20. The content transfer system of the present embodiment differs from the content transfer system 10 shown in Figure 1 in that the content receiving devices 12, 13 determine whether to permit or prohibit the one-way communications 14 depending on the type of the content. Otherwise, the content transfer system of the present embodiment and the system 10 are structurally the same. Here, for convenience, members of the present embodiment that have the same arrangement and function as members of the previous embodiment, and that are mentioned in that embodiment are indicated by the same reference numerals and description thereof is omitted.

Figure 19 shows a flow of the operation of the control section 40 in the content transmission device 11 of the present embodiment. As illustrated in the figure, the display section 45 first displays thumbnails for plural pieces of content under the control of the control section 40 (S10). Next, the control section 40 selects the content which corresponds to a thumbnail selected by the user manipulating the operation section 46 (S11).

Next, the control section 40 determines whether the user-selected content is of a type that is permitted for the one-way communications 14, prohibited from the one-way communications 14, and prohibited from transmission (S50).

For example, copyrighted content is prohibited from transmission is prohibited transmission. Restrictions are preferably placed so as not to permit one-way communications 14 in transmission of an entire address book for an mobile phone handset for the following reasons: since the address book contains personal information of other people, and multiple receivers could simultaneously receive in the one-way communications 14, the personal information of the other people may leak to a third party. Especially, data containing personal information is preferably kept secret and communicated by the two-way communications 15 and only after completely identifying the transmitter and the receiver using, for example, IDs.

To restrict communications schemes as above, the unit of content identified in step S50 is a piece of content in some cases, plural pieces of content sharing a common attribute in some cases, and part of a certain piece of content in other cases. For example, when a photograph is selected, the identified unit is that selected, one photograph. If a data folder is selected, the unit is part or all of the content in the selected data folder. If the personal information of someone in an address book is selected, the identified unit is the personal information of that person in the content, or the address book.

If the selected content is determined in step S50 to be permitted for the one-way communications 14, the control section 40 controls the display section 45 to display a transfer menu (S51). In the example shown in Figure 6(a), a "Send" button is displayed at the bottom of the display screen 32. The display screen 32 may display another menu, such as rotation and scale-up, other than transmission. The transfer menu may be displayed when the "Menu" button at the bottom of the display screen 32 shown in Figure 6(a) is selected.

Next, as the "Send" button is selected by the user, the control section 40 controls the display section 45 to display selection items to choose between the one-way communications 14 and the two-way communications 15 (S52). Figure 20 illustrates the selection items 85 being displayed on the display screen 32. Next, the control section 40 determines which of the selection items (communications schemes) 85 the user has selected on the operation section 46 (S53).

If it is determined in step S53 that the one-way communications 14 are selected, the control section 40 carries out the same step as step S13 shown in Figure 10. Thereafter, the operation returns to step S10, and the same operation as described so far is repeated.

On the other hand, if it is determined in step S53 that the two-way communications 15 are selected, the control section 40 carries out the same steps as steps S14 to S18 shown in Figure 10. Thereafter, the operation returns to step S10, and the same operation as described so far is repeated.

Steps S51, S52 may be omitted so that one of the communications schemes, the one-way communications 14 or the two-way communications 15, may be selected according to which of the numeral keys (input button group 35 shown in Figure 6(b)) on the content transmission device 11 is pressed. In other words, the one-way communications 14 may be assigned to numeral key "1," and the two-way communications 15 to numeral key "2." In addition, A "cancel" menu (not shown) may be provided in the selection items 85 or for numeral key assignment shown in Figure 20 so that it is selectable in order to suspend communications.

On the other hand, if the selected content is determined in step S50 to be prohibited from the one-way communications 14, the control section 40 controls the display section 45 to display a start transfer message (S54). The start transfer message reads, for example: "Point at receiver and press ENTER." At that time, a transfer menu as in step S51 may be displayed.

Next, the control section 40 determines whether or not there is a user command input (S55). If there is no transfer command input for a predetermined period of time (for example, 10 seconds) or a suspend transfer command input (No in S55), the section 40 cancels the transfer. The operation returns to step S10, and the same operation as described so far is repeated.

On the other hand, if there is a transfer command input (for example, if the enter button is pressed), the control section 40 starts the two-way communications 15. In other words, the section 40 carries out the same steps ass steps S14 to S18 shown in Figure 10. Thereafter, the operation returns to step S10, and the same operation as described so far is repeated.

On the other hand, if the selected content is determined in step S50 to be prohibited from transfer, the control section 40 controls the display section 45 to display an error message as described earlier (S19). Thereafter, the operation returns to step S10, and the same operation as described so far is repeated.

The following is examples of possible criteria for the switching between the one-way communications 14 and the two-way communications 15 or as to whether to allow the user to select between the one-way communications 14 and the two-way communications 15.

(1) Data set count

One-way communications allowed for transfer of one address data set, transfer of one photograph, etc.
One-way communications prohibited for entire address data, whole photograph folder, etc.

(2) Content type

One-way communications allowed for photographs, streaming, etc.
One-way communications prohibited for emails, documents, movies, music, etc.

(3) Data volume

One-way communications allowed for transfer of content smaller in number or volume than predetermined value
One-way communications prohibited for transfer of content not smaller in number or volume than predetermined value
For example, if the packet size is 256 byte and the packet error rate (reliability) is $10^{-8}$, a transfer of 1-megabyte file results in a communications error rate of about 3.8%. If the communications error rate is tolerated up to 10%, the size of a file that can be transferred is about 3 megabytes. Therefore, 3 megabytes could be a criterion to permit/prohibit the one-way communications.
If an communications error occurs after 5 seconds or longer communications, the user would be disappointed. Accordingly, a duration of communications may be estimated from content size and transfer rate so that the one-way communications are permitted/prohibited using a 5-second duration of communications as the criterion.

(4) Communications conditions

For example, the communications scheme could be switched from the two-way communications 15 to the one-way communications 14 when the incoming signal strength, error rate, or another indicator of communication conditions worsens.
In addition, if the user enters a command to send the same content by the one-way communications 14 again and again, the section 40 may determine that attempts to transfer the content have repeatedly failed and automatically switch on the fly to the two-way communications 15. Specifically, if there are found three command inputs to transfer the same content in transfer history, an attempt is made to connect by the two-way communications 15 first for the third time. Similarly, if there are found repeated errors in attempts to transfer the same content by the two-way communications in transfer history, the section 40 may automatically switch to the one-way communications 14. Alternatively, in a case of optical communications, a message which, for example, reads "Move closer to receiver." may be displayed for the third transfer.

(5) Copyright and other conditions

Copyrighted content is generally not allowed to be transferred. However, there is some copyrighted content that is allowed to be transferred to authenticated receivers. For example, digital broadcast content recorded for personal use may be legally transferred for personal use using copyright protection technology. In that case, however, the receiver needs to be authenticated by the two-way communications 15. Only the two-way communications 15 are selectable. Also in that case, the content itself or the entire communications are preferably encrypted.
As described in the foregoing, the content transmission device 11 of the present embodiment is capable of switching between the one-way communications 14 and the two-way communications 15 according to content type, volume, and communications conditions to transmit communications data. As a result, the device 11 is capable of flexible content transfer.
Figure 20 shows a display a selection menu between one-way communications and two-way communications. Depending on application, however, a selection menu may be displayed as in "Transfer to AV device" or "Transfer to mobile phone."

Embodiment 3

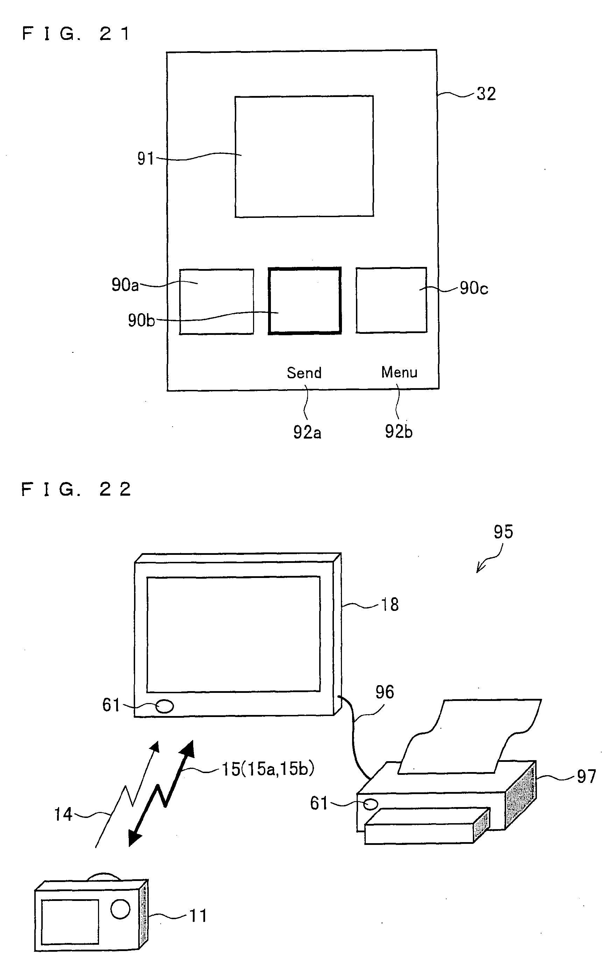

Next will be described another embodiment of the present invention in reference to Figure 21. The content transfer system of the present embodiment differs from the content transfer system 10 shown in Figure 1 in that the transmission end sequentially transmits image content so that the receiving end can run a slide show. Otherwise, the content transfer system of the present embodiment and the system 10 are structurally the same. Here, for convenience, members of the present embodiment that have the same arrangement and function as members of the previous embodiments, and that are mentioned in the embodiments are indicated by the same reference numerals and description thereof is omitted.

To run a slide show, step S11 in Figure 10 is replaced by a step in which the content transmission device 11 measures time with a built-in timer and automatically select and transmit a next piece of content for every predetermined period of time.

Figure 21 illustrates a display screen 32 in the content transmission device 11 running a slide show. As illustrated in the figure, the display screen 32 displays three thumbnails 90a to 90c in the lower part and an image 91 in the upper part. The image 91 is a scale-up of the middle thumbnail 90b. At the bottom of the display screen 32 are displayed a transmission-related button 92a and a menu button 92b. The transmission-related button 92a is a toggle switch between "Send" and "Suspend temporarily." Using these buttons, the user can temporarily suspend and restarts the slide show.

The content transmission device 11 configured as above transmits a still image (content) corresponding to the middle thumbnail 90b in Figure 21. For example, 5 seconds after that, the right thumbnail 90c on the display screen 32 moves to the middle, and a new thumbnail appears on the right. Next, a scale-up image 91 of the thumbnail 90c which has moved to the middle is displayed in the upper part. A still image (content) corresponding to the thumbnail 90c is then transmitted. These steps are repeated.

The present embodiment describes an example in which still images in a folder are sequentially transmitted. Apart from that, a slide show is possible using only those taken or otherwise obtained on a particular date and time or on particular dates. Alternatively, the user may preselect files, movies, still images, etc. for a later sequential transfer. In addition, for movies, songs, and other objects with a definite play time, the device 11 may determine a play time instead of a predetermined time on the timer and send a next set of data when the play time of the current object is over or a predetermined period of time after the replay of the current one ends. Furthermore, if the content receiving devices 12, 13 are capable of reproducing and receiving simultaneously, the device 11 may start transmitting a next object before the replay of the current one is finished.

In these slide shows, data transfer is started and suspended repeatedly over an extended period of time; the clamshell-type mobile phone handset is preferably capable of continuing communications even after the handset is folded up. Meanwhile, the mobile phone handset may be totally forgotten and left away; the handset preferably automatically stops the slide show after a predetermined period of time or after all the scheduled content is transmitted.

If the content receiving devices 12, 13 can print, the device 11 preferably not only transmits content every predetermined period of time, but also sends a print command or other information to activate the print function. For example, steps could be carried out to transmit a piece of content, transmit a print command, stand by for a predetermined period of time, and transmit another piece of content. It takes different lengths of time to print different pieces of content; the stand-by time may be dynamically determined depending on data size or image size.

Embodiment 4

Next will be described another embodiment of the present invention in reference to Figures 22 to 26. The content transfer system of the present embodiment differs from the content transfer system 10 shown in Figure 1 in that a printer is connected to a television receiver 18 with a built-in content receiving device 12 and a display device 17. Otherwise, the content transfer system of the present embodiment and the system 10 are structurally the same. Here, for convenience, members of the present embodiment that have the same arrangement and function as members of the previous embodiments, and that are mentioned in the embodiments are indicated by the same reference numerals and description thereof is omitted.

Figure 22 is a schematic of the content transfer system of the present embodiment. As illustrated in the figure, the content transfer system 95 differs from the content transfer system 10 shown in Figure 1 in that a printer 97 is connected to the television receiver 18 via a cable 96. Otherwise, the content transfer system of the present embodiment and the system 10 are structurally the same. In the illustrated example, the content transmission device 11 is a digital camera.

The television receiver 18 may include a built-in digital tuner. Unlike digital cameras, mobile phone handsets, and other mobile information terminals, many digital tuners include built-in high performance hardware to decompress, for example, MPEG2 files. Therefore, the television receiver 18 preferably displays/reproduces the content transferred from the content transmission device 11 using that hardware.

In the content transfer system 95 of the present embodiment, the content transferred from the content transmission device 11 is displayed on the television receiver 18 and printed on the printer 97. The printer 97 may directly receive the content from the content transmission device 11 via the built-in communications section 61. More preferably, the printer 97 receives the content from the television receiver 18 via the cable 96.

Both the television receiver 18 and the printer 97 receive communications data if data is transmitted from the content transmission device 11 by the one-way communications 14 and to broadcast addresses (unspecified receiving ends). This is not seriously problematic if the printer 97 only receives the communications data.

However, when the printer 97 has a display section and a communications indicator similarly to the television receiver 18, if the content transmission device 11 points at the television receiver 18 to transmit content to the receiver 10, the television receiver 18 correctly receives/reproduces the content, whereas the display section or the communications indicator (notification means) of the printer 97 next to the receiver 10 indicates a communications error. This is a status report which makes no sense to the user.

To address this problem, the printer 97 preferably has a button or mode using which the reception of data over light is stopped. Further, the mode is preferably switchable according to a command from the content transmission device 11.

Specifically, the printer 97 is preferably switchable between data reception permit/prohibit modes by wireless communications or data print permit/prohibit modes by wireless communications in either or both of the one-way communications 14 and the two-way communications 15. Therefore, the printer 97 needs to be capable of receiving a mode switch command and switching between the modes even when the printer 97 is prohibited from printing and receiving content. Furthermore, if absolutely no data is received by wireless communications, the printer 97 may receive no mode switch command and stop its data receiving functionality. In that case, unnecessary incoming data stand-by poser consumption is reduced.

Therefore, the printer is preferably switchable between the following three operation modes:

an operation mode in which the printer can receive content by wireless communications and print it (ON mode),
an operation mode in which the printer can receive a limited number of commands, such as a switching command between a mode in which the printer can receive content by wireless communications, print it, and so forth and a mode in which the printer cannot receive content by wireless communications, print it, and so forth (sleep mode), and
an operation mode in which the printer can receive absolutely no commands and data (wireless rejection mode).

The printer preferably informs the user of the reception status (communications completed, communications failure, buffer full, etc.) of content and commands in the ON mode, only of the acceptance of mode switching and other limited commands in the sleep mode, and of nothing in the wireless rejection mode. If the user is informed of an error in the sleep mode, the user may be confused because devices other than the targeted one can display an error message. In optical communications, the wireless rejection mode is in practice provided by equipping the communications section 61 with a cover physically blocking incoming light.

When the content transmission device 11 directly sends communications data to the printer 97, the content transmission device 11 preferably transmits by the two-way communications 15 so that the printer 97 can reliably receive the communications data and print from it.

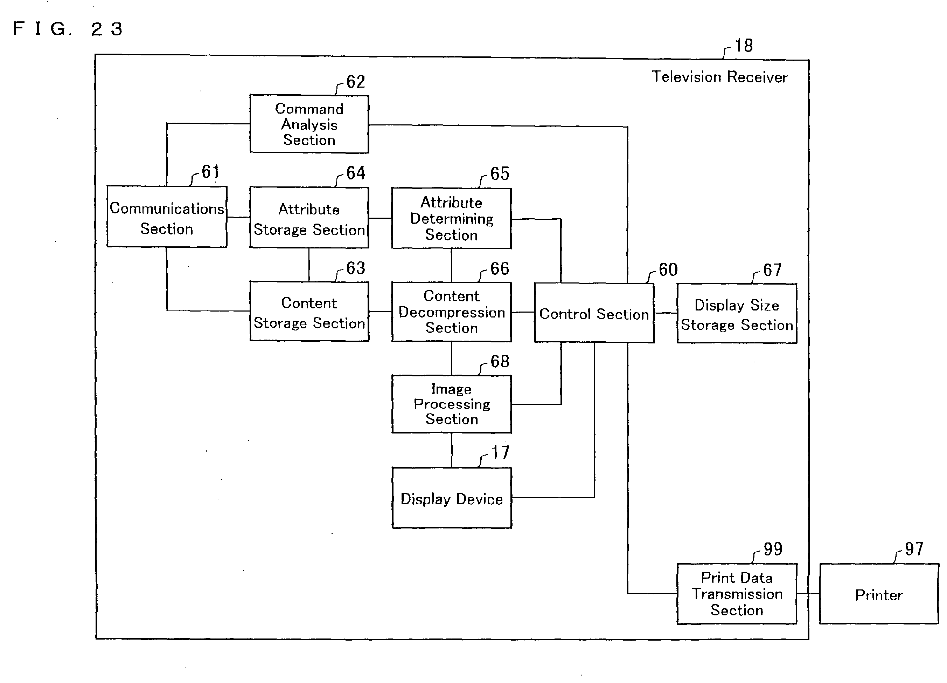

Figure 23 is a schematic of the television receiver 18. The television receiver 18 in the figure differs from the content receiving device 12 and the display device 17 in Figure 12 in that the receiver 18 includes a print data transmission section (transmission means) 99 which transmits print data to the printer 97. Otherwise, the receiver 18 has the same structure as the devices 12, 17.

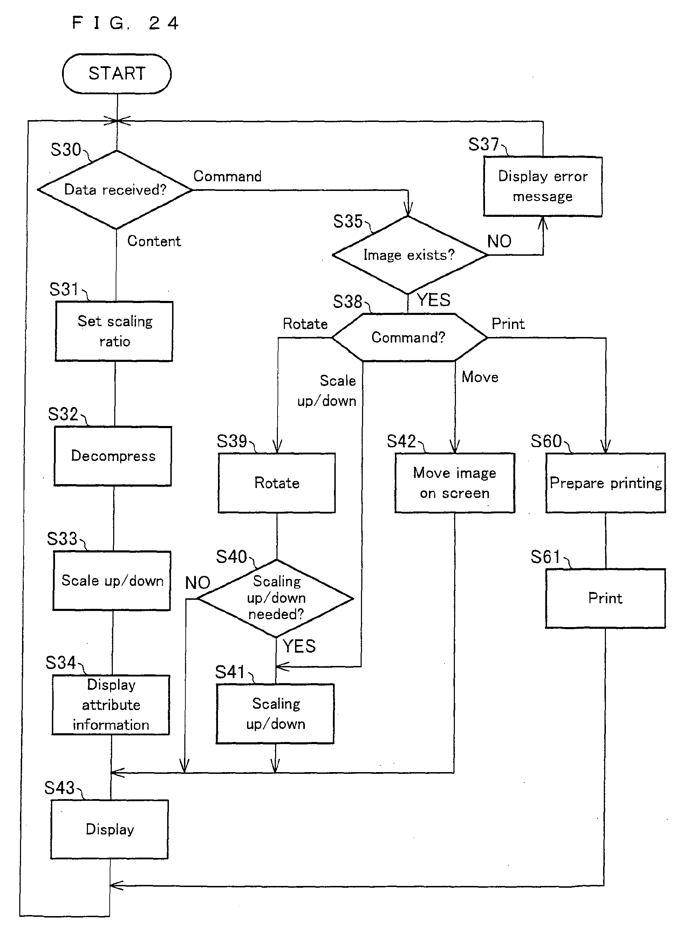

Figure 24 shows a flow of command processing as executed by the television receiver 18. The command processing shown in the figure differs from the command processing shown in Figure 18 in that the former includes an additional print command step. The other steps are the same. The following will describe the additional step.

First, a command is analyzed to determine its type (including an additional print command for printing) in step S38. If the received command is a print command, the operation proceeds to step S60.

In step S60, the control section 60 in the television receiver 18 receives the print command and controls the print data transmission section 99 to transmit a prepare print command and print data to an external printer 97. In the case of a movie, a still image derived from the movie is sent to the printer 97. Examples of the command include those for print paper settings, layout settings, and print quality settings. The control section 60 then controls the print data transmission section 99 to transmit a print command to start printing (S61). Thereafter, the operation returns to step S30.

The still image transmitted here may contain attribute information which will be displayed with the still image as in the foregoing case. Specifically, the printer 97 receives a superimposition still image produced by superimposing the attribute information, such as a filming date and time, onto the on-screen still image. Accordingly, the resultant print contains print date and time, user comments, etc.

The still image may be sent to the printer 97 after compressing it in, for example, JPEG format to reduce the duration of communications. In that case, the printer 97 needs to have a function to decompress the compressed image.

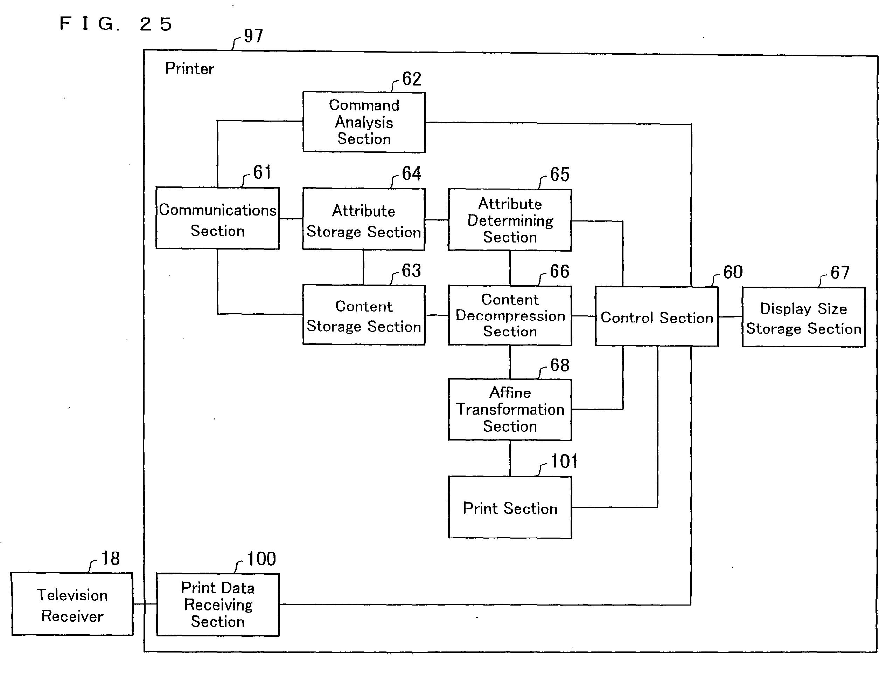

Figure 25 is a schematic of the printer 97 operating as a content receiving device. The printer 97 in the figure differs from the content receiving device 12 shown in Figure 12 in that the printer 97 includes a print data receiving section 100 which receives various commands and data for printing from the television receiver 18 and a print section 101 which prints from the commands and data received by the print data receiving section 100. Otherwise, the printer 97 has the same structure as the content receiving device 12.

The printer 97 has two receive modes: a wireless reception mode in which the printer 97 is allowed to receive wirelessly and a wireless rejection mode in which the printer 97 is not allowed to receive wirelessly. The wireless reception mode is further divided into a sleep mode and an ON mode.

The printer 97 is allowed only accept an ON command in the sleep mode. The printer 97 is allowed to receive content and print and otherwise process received data in the ON mode. In the wireless rejection mode, the printer 97 is allowed to stop power supply to the communications section 61.

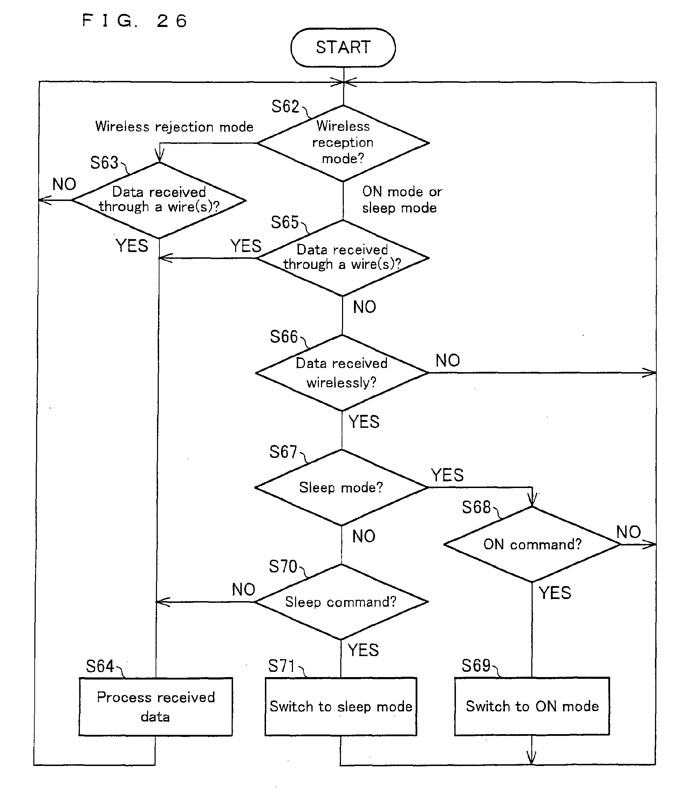

Figure 26 shows a flow of operation of the control section 60 in the printer 97. As illustrated in the figure, first, the control section 60 determines whether the printer 97 is in the wireless reception mode or the wireless rejection mode (S62). If the printer is in the wireless rejection mode, the section 60 determines whether or not data has been received over a cable (i.e., wired) (S63). If not, the operation returns to step S62. If so, the operation proceeds to step S64.

On the other hand, if it is determined in step S62 that the printer is in the wireless reception mode, the operation flows as follows. First, the section 60 checks to see whether or not data has been received through a wire(s) (S65). If so, the operation proceeds to step S64. On the other hand, if not, the section 60 checks to see whether or not data has been received wirelessly (S66). If not again, the operation returns to step S62, and the same operation as described so far is repeated.

On the other hand, if data has been received wirelessly, not through a wire(s), the section 60 checks to see whether or not the printer 97 is in the sleep mode (S67). If so, the section 60 checks to see whether or not an ON command has been received (S68), If so, the section 60 switches the printer 97 to the ON mode (S69). Thereafter, the operation returns to step S62, and the same operation as described so far is repeated.

On the other hand, if the printer is not in the sleep mode in the step S67, the section 60 checks to see whether or not the received communications data is a sleep command to switch to the sleep mode (S70). If not, the operation proceeds to step S64. On the other hand, if so, the section 60 switches the printer 97 to the sleep mode (S71). Thereafter, the operation returns to step S62, and the same operation as described so far is repeated.

In step S64, the received data is processed if the data has been received through a wire(s) or if content has been received wirelessly while the printer 97 is in the ON mode. In other words, since the device of interest is the printer 97, the content is printed. Thereafter, the operation returns to step S62, and the same operation as described so far is repeated.

If data has been received through a wire(s), the data transmitted wirelessly is likely to be received at first by another device, such as the television receiver 18, and then transmitted through a wire(s) from the television receiver 18 to the printer 97. Therefore, if print data has been received through a wire(s), the section 60 may automatically switch the printer 97 to the sleep mode or the wireless rejection mode.

The printer 97 returns from the wireless rejection mode to either the ON mode or the sleep mode when the user switches a selector switch (not shown) provided on the printer 97.

The description about the display of resized images shown in Figures 15(a) to 17(c) applies to print sizes. Therefore, if the data size does not match the size for the current print mode, the received image can be resized before printing.

Therefore, the content transfer system 95 of the present embodiment is capable of preventing the printer 97 from receiving unnecessary communications data because the printer 97 restricts reception by the communications section 61 in the sleep mode, the wireless rejection mode, etc.

Embodiment 5

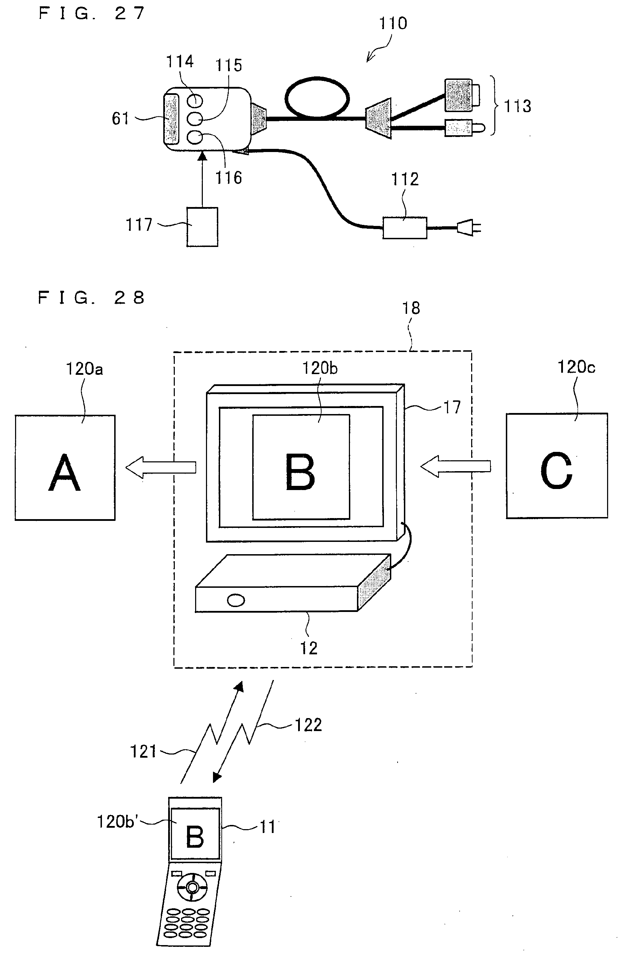

Next will be described another embodiment of the present invention in reference to Figure 27. The content transfer system of the present embodiment differs from the content transfer system 10 shown in Figure 1 in that the content receiving device 12 is provided as a peripheral (bridge) to the television receiver. Otherwise, the content transfer system of the present embodiment and the system 10 are structurally the same. Here, for convenience, members of the present embodiment that have the same arrangement and function as members of the previous embodiments, and that are mentioned in the embodiments are indicated by the same reference numerals and description thereof is omitted.

Figure 27 shows the exterior of the bridge 110. The bridge 110 includes the components shown in Figure 12 and a power supply cable 112, external output cables 113, indicators 114 to 116, and a memory card 117 shown in Figure 27.

The power supply cable 112 transfers electric power from outside. Providing a built-in battery in place of the power supply cable 112 is preferable for better mobility.

The external output cables 113 are provided to externally output data. The external output cables 113 may be of any type including those compatible with analog video signals or audio signals, S video, USB, HDMI, and DVI. The illustrated example includes two external output cables 113; there may be only one external output cable 113 or three or more of them.

The indicators 114 to 116 indicate the status of the bridge and are constructed of, for example, LEDs. The indicator 114 indicates whether or not the power supply is on: the green light is on when power supply is on and off when the power supply is off. The indicator 115 indicates a successful reception (green light on), a reception in progress (green light off), and a failed reception (red light on, turns off after a predetermined period of time). The indicator 116 indicates whether reception is permitted (no light on) or prohibited (red light on) in the receive operation mode.

The memory card 117 stores various data. Content becomes obtainable from a storage medium for display by connecting to the bridge 110 the memory card 117 written by an external device, rather than by communications. A hard disk, instead of the memory card 117, may be connected.

Embodiment 6

Next will be described another embodiment of the present invention in reference to Figures 28 to 31. The content transfer system of the present embodiment differs from the content transfer system 10 shown in Figure 1 in that the television receiver 18 is capable of transmitting content to the mobile phone handset 11. Otherwise, the content transfer system of the present embodiment and the system 10 are structurally the same. In other words, in the present embodiment, the mobile phone handset 11 and the television receiver 18 each operate as a content transmission device and also as a content receiving device. Here, for convenience, members of the present embodiment that have the same arrangement and function as members of the previous embodiments, and that are mentioned in the embodiments are indicated by the same reference numerals and description thereof is omitted.

Figure 28 shows an example case where in the content transfer system 10 of the present embodiment, the television receiver 18 displays content and transmits desired content to the mobile phone handset 11. In that case, the television receiver 18 is a content transmission device, and the mobile phone handset 11 is a content receiving device.

In the present embodiment, the television receiver 18 runs a slide show. In other words, as illustrated in Figure 28, the television receiver 18 sequentially displays the content 120a to 120c stored therein in response to a command input by the user on the mobile phone handset 11 or at a predetermined interval.

Assume that a transmit request command is sent from the mobile phone handset 11 while an image 120b is being displayed on the television receiver 18. The user views the image 120b being displayed and if he/she wants that content, presses a predetermined button on the mobile phone handset 11. As a result, a command for a content transmission request 121 is sent from the mobile phone handset 11 to the television receiver 18. The television receiver 18, upon receiving the content transmission request 121, transmits communications data 122 containing the content 120b currently on display to the mobile phone handset 11. Accordingly, the mobile phone handset 1 receives the image 120b to store and display it locally.

The transmit may be in either one of communications schemes: the one-way communications 14 and the two-way communications 15.

The control commands may be of any format. HTTP, a popular format on the Internet, is typically used in communications designed primarily for file transfer. Data can be transferred from a client (a user device (mobile phone handset 11)) to a server (television receiver 18) or vice versa using HTTP. When a transfer protocol designed primarily for file transfer is used, for example, a particular file name, such as IrSimple.cmd, is defined and a command, such as rotate, is recorded in the file content so that the receiving end can identify the command and operate according to the command, as in the content transfer system 10 shown in Figures 1 to 18.

A simple remote controller for a household electrical appliance may be used to send a content transfer request command. A request command desired by the user may be sent using, for example, arrow and enter keys on an ordinary remote controller for television operation.

The description above discussed an example where the television receiver 18 runs a slide show and when necessary, transmits content to the mobile phone handset 11. The mobile phone handset 11 may run a slide show (transmits no content during the show) and transmits content being displayed in the current slide show on the television receiver 18 according to a user request.

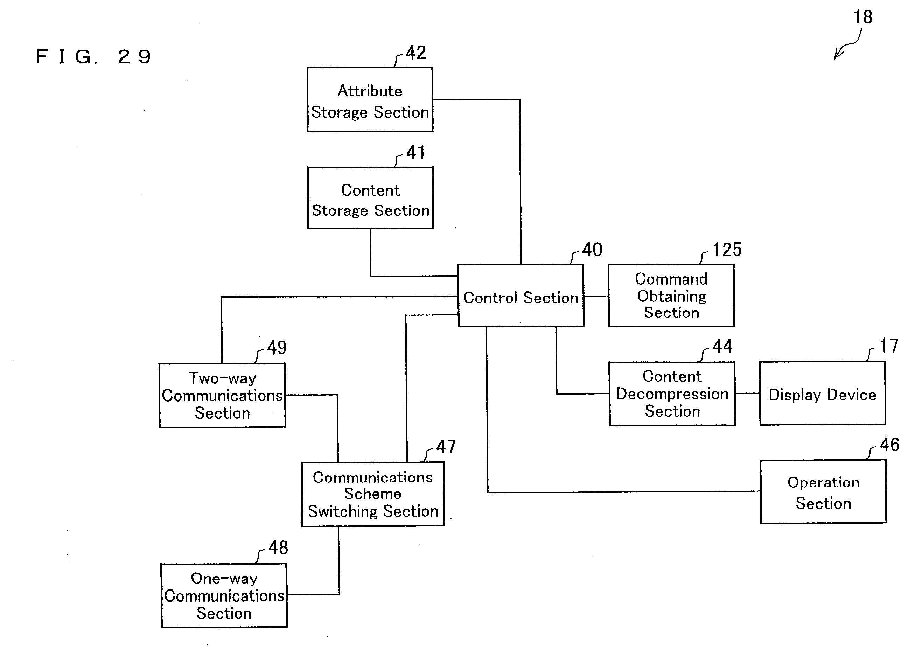

Figure 29 is a schematic of the television receiver 18 operating as a content transmission device. The configuration in the figure differs from the configuration of the content transmission device 11 shown in Figure 7 in that the command generating section 43 is replaced by a command obtaining section 125 obtaining a command from the mobile phone handset 11 and also that the display section 45 is replaced by a display device (reproduction means) 17. Otherwise, the configuration in the figure is the same as the configuration of the content transmission device 11.

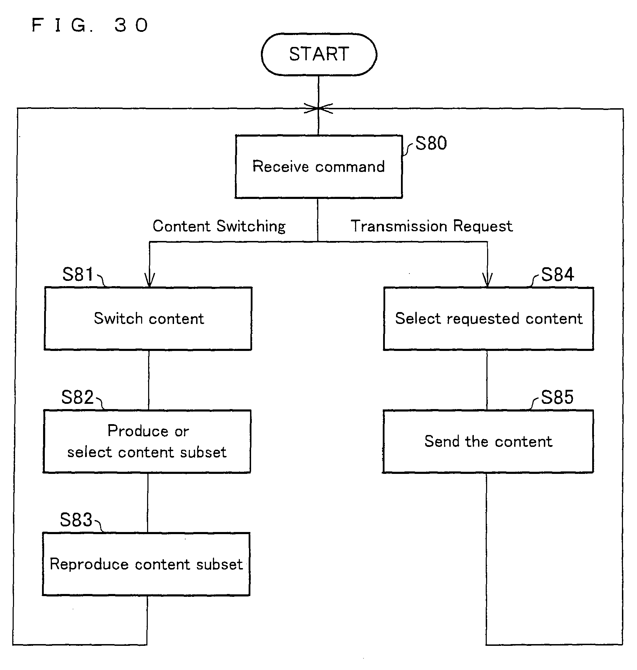

Figure 30 shows a flow of operation of the television receiver 18 when the receiver 18 has received a command from the mobile phone handset 11. As illustrated in the figure, first, a command is received (S80). In this step, in the case of identifying the aforementioned file name, data is first received and identified to be a command, and its contents are determined.

If the received command is a content switching command, content is switched (S81). Specifically, by pressing an arrow key on the mobile phone handset 11 when the system is in the state shown in Figure 28, a next content command is sent from the mobile phone handset 11 to the television receiver 18 to switch from the still image 120a to the still image 120b.

Next, subset content is produced or selected from next content selected through the command in step S81 (S82). In this context, subset content refers to producing or selecting, for example, 20 seconds into a song, not a whole song, a digest version of a movie, a still image derived from a movie, etc. In that selection, subset content is selected when subset content associated with content in advance is stored.

Next, the subset content produced or selected in step S82 is reproduced (S83). Thereafter, the operation returns to step S80, and the same operation as described so far is repeated.

On the other hand, if the received command is a transmit request command in step S80, content corresponding to the subset content currently being reproduced or having been recently reproduced is selected (S84), The selected content is transmitted (S85). Thereafter, the operation returns to step S80, and the same operation as described so far is repeated.

Therefore, the user can have a rough idea on the contents of the content stored in the content storage section 41 by accessing the subset content reproduced on the television receiver 18. As the user requests a desired piece of content to the television receiver 18 through the mobile phone handset 11, the content is transferred from the television receiver 18 to the mobile phone handset 11. In other words, in the present embodiment, only the content requested by the mobile phone handset 11 to the television receiver 18 is transmitted from the television receiver 18 to the mobile phone handset 11. Therefore, the workload in communications can be dramatically lowered when compared to the cases where the content stored in the content storage section 41 is sequentially transmitted to the mobile phone handset 11.

Content switching takes place with a command in the process shown in Figure 30. Alternatively, a timer may be used to automatically switch to a next piece of content after a predetermined time.

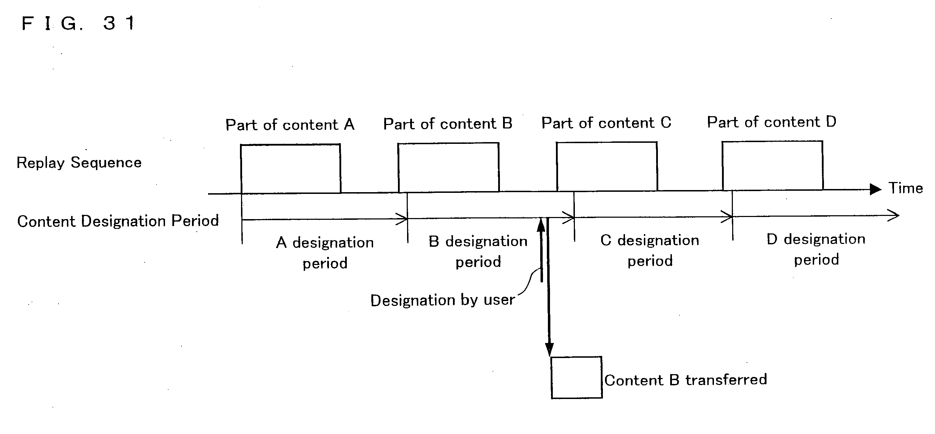

Figure 31 is an example of operation timings shown in Figure 30. Figure 31 shows a replay sequence and content designation periods on a time axis. Plural pieces of content (subsets) are reproduced one after the other according to the replay sequence. For example, when music is being reproduced, a silence should be inserted between individual pieces of content so that the user can better recognize them.

It takes a while for the user to press a transmit request button (user designation in the figure) after the user decides to do so. Accordingly, the content designation period (almost) covers the replay period for the corresponding piece of content and ends immediately after the start of the replay period for a next piece of content. If there is a transmission request during a content designation period, a corresponding piece of content is transferred from the television receiver 18 to the mobile phone handset 11. The content designation period may end at the start of the replay period for the next piece of content or immediately before that start.

The content reproduced according to the replay sequence is part of content (subset). The original content can be longer in play time or better in quality than the subset. Accordingly, the user selects from subset content, but it is preferably content that is transferred.

For example, if the content is a still image, the subset content may be a scale-up or a scale-down of the original content or the original content itself. If the content is a movie, the subset content may be a still image representing part of the movie, its title, or duration of filming. If the content is a song, the subset content may be the most typical part (most memorable part) of the song or the beginning of the song.

A designation by the user may be made using a button on the television receiver 18, a keyboard, a mouse, an infrared remote controller, etc., apart from a command transmitted from the mobile phone handset 11.

Embodiment 7

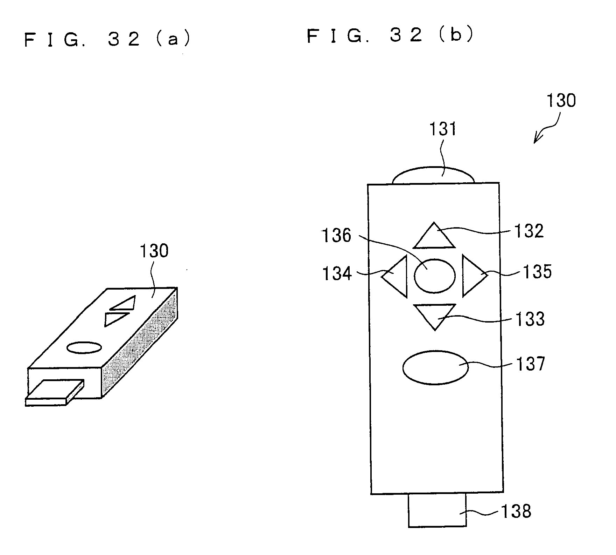

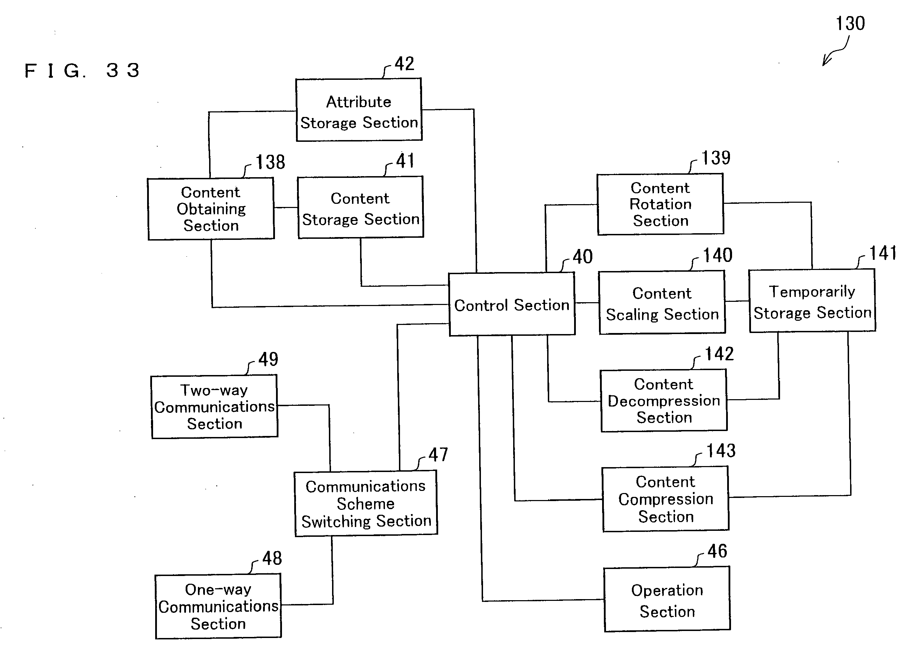

Next will be described another embodiment of the present invention in reference to Figures 32(a), 32(b) and 33. The content transfer system of the present embodiment differs from the content transfer system 10 shown in Figure 1 in that the content transmission device 11 is a mobile transmitter as extremely simple as the infrared remote controller. Otherwise, the content transfer system of the present embodiment and the system 10 are structurally the same. Here, for convenience, members of the present embodiment that have the same arrangement and function as members of the previous embodiments, and that are mentioned in the embodiments are indicated by the same reference numerals and description thereof is omitted.

Figures 32(a), 32(b) show the exterior of the mobile transmitter 130. As illustrated in the figure, a communications section 131 capable of infrared data communications is mounted to the tip of the mobile transmitter (data transmission device) 130. The communications section 131 may be capable of communications by either or both of the communications schemes, the one-way communications 14 and the two-way communications 15.

On the top face of the mobile transmitter 130 are there provided a scale-up button 132 to make an instruction for scale-up of content, a scale-down button 133 to make an instruction for scaling down of content, a previous selection button 134 to make an instruction for reproduction of a previous content, a next selection button 135 to make an instruction for reproduction of a next piece of content, a transmission button 136 to make an instruction for transmission of content, and a rotation button 137 to make an instruction for rotation of content. The rotation button 137 would normally designated to a 90° clockwise rotation as viewed by a user facing the display screen. A new button may be provided designated to a counterclockwise rotation.

The mobile transmitter 130 includes on its bottom an I/F section 138 to exchange data with external devices. Specifically, the I/F section 138 may be a USB 2.0 wired interface or a wireless interface for receiving data wirelessly from an Internet service provider.

Figure 33 is a schematic of the mobile transmitter 130. As illustrated in the figure, the mobile transmitter 130 differs from the content transmission device 11 shown in Figure 7 in that the transmitter 130 additionally includes a content obtaining section 138 containing an I/F section, a content rotation section (processing means) 139, a content scaling section (processing means) 140, a temporarily storage section 141, a content decompression section 142, and a content compression section (compression means) 143.

The content obtaining section 138 obtains content, such as movies, still images, music, and presentation documents, from external devices (not shown). The content obtained by the content obtaining section 138 is transferred to and stored in the content storage section 41. Attribute information corresponding to the content is transferred to and stored in the attribute storage section 42.

The content rotation section 139 rotates the currently selected content clockwise by 90° according to an instruction from the rotation button 137 of the operation section 46. The rotated content is stored in the temporarily storage section 141.

The content scaling section 140 scales up or down the currently selected content according to an instruction from the scale-up button 132 and the scale-down button 133 of the operation section 46. The scaled up or down content is temporarily stored in the storage section 141.

The temporarily storage section 141 temporarily stores content currently being processed. Normally, compressed content needs to be decompressed before scaling. The temporarily storage section 141 is used also as the working memory for the decompression.

The content decompression section 142 decompresses compressed content. The decompressed content is temporarily stored in the storage section 141. The content compression section 143 compresses the rotated, scaled up, scaled down, or otherwise processed content back into JPEG, MPEG2, ZIP or a like format.

The mobile transmitter 130 of the present embodiment differs from the content transfer system containing the content transmission device 11 shown in Figure 7 and the content receiving devices 12, 13 shown in Figure 12 in that it is the content transmission end that rotates, scale down or up content. In that case, the receiving end simply reproduces the content and can have simplified structure. By obtaining the display size at the receiving end by the two-way communications 15, the transmission end is capable of such scaling that the resultant size matches the display size of the receiving end shown in Figures 15(a) to 17(c).

The mobile transmitter 130 of the present embodiment has an I/F section .138 like a USB and acts as a external storage device for a personal computer or a mobile terminal. Accordingly, the user can create a presentation document on a personal computer, convert the document into a suitable format on the personal computer, and transfer it to a main device. Simply by holding the mobile transmitter 130 the user can send data to a projector capable of receiving that data for a display, doing presentation very easily.

Presentations are often made using a PDF (Portable Document Format) file developed by Adobe. This format enables a single file to contain a document of multiple pages. SVG (Scalable Vector Graphics) format shares the same feature. Therefore, the mobile transmitter 130 preferably includes: a page detection section (page detection means) detecting a page division from the document of multiple pages contained in a single file; a page dividing section (page dividing means) dividing the document into individual pages according to the detected pages; and a file constructing section (filing means) making the individual pages satisfy requirements as a file, wherein the transmitter 130 transmits page by page as a file. That enables a document of multiple pages to be transmitted page by page, which is effective in presentation.

Simply dividing according to page divisions and making the pages into files may not lead to a suitable display. Processing is therefore needed (e.g., correct header information is added) so that the individual pages can be recognized in the correct format. This processing differs from one format to the other; however, there are known methods. In addition, when the receiver can reproduce files of limited formats, the mobile transmitter 130 preferably cuts out a page after page from a PDF file and converts each page to a format (for example, JPEG) the receiver can handle, before transmission.

The mobile transmitter 130 preferably enables changing directories and other file selecting operations using the buttons 132 to 136 shown in Figure 32(b). When the receiver is compatible with limited formats, such as reproduction of JPEG files, the mobile transmitter 130 preferably graphically displays a folder name, a folder structure, etc. and compresses them in JPEG, before transmission. That enables an external display device to display a folder name, a file name, a folder structure, etc. so that the user could select a file or a folder using that information and the buttons 132 to 136.

The present invention is not limited to the description of the embodiments above, but may be altered by a skilled person within the scope of the claims. An embodiment based on a proper combination of technical means disclosed in different embodiments is encompassed in the technical scope of the present invention.

For example, throughout the embodiments, the content transmission device 11 is primarily a mobile phone handset. The device 11 may be a digital still camera, a digital video camera, a PDA, or any other mobile communications terminal, so long as the device 11 is capable of two-way communications and one-way communications with the data receiving device 12. The device 11 may also be a desktop-type communications terminal.

In addition, in the present embodiment, the information transfer system 10 includes the two content receiving devices 12, 13. Only one of them may be involved, or more than two of them may be involved.

Throughout the embodiments, one-way communications and two-way communications are conducted wirelessly. Wired communications are also a possibility. In addition, throughout the embodiments, the content was primarily supposed to be images; the embodiments are applicable also to audio or another form of content.

Finally, the blocks of the content transmission device 11 and the content receiving devices 12, 13, especially those of the control sections 40, 60 may be realized by hardware or software executed by a CPU as follows:

The content transmission device 11 and the content receiving devices 12, 13 each include a CPU (central processing unit) and memory devices. (storage media). The CPU executes instructions contained in control programs, realizing various functions. The memory devices may be a ROM (read-only memory) which contains programs, a RAM (random access memory) to which the programs are loaded, or a memory containing the programs and various data. The objective of the present invention can be achieved also by mounting to the content transmission device 11 and the content receiving devices 12, 13 a computer-readable storage medium containing control program code (executable programs, intermediate code programs, or source programs) for the content transmission device 11 and the content receiving devices 12, 13, which is software realizing the aforementioned functions, in order for the computer (or CPU, MPU) to retrieve and execute the program code contained in the storage medium.

The storage medium may be, for example, a tape, such as a magnetic tape or a cassette tape; a magnetic disk, such as a floppy® disk or a hard disk, or an optical disc, such as CD-ROM/MO/MD/DVD/CD-R; a card, such as an IC card (memory card) or an optical card; or a semiconductor memory, such as a mask ROM/EPROM/EEPROM/flash ROM.

The content transmission device 11 and the content receiving devices 12, 13 may be arranged to be connectable to a communications network so that the program code may be delivered over the communications network. The communications network is not limited in any particular manner, and may be, for example, the Internet, an intranet, extranet, LAN, ISDN, VAN, CATV communications network, virtual dedicated network (virtual private network), telephone line network, mobile communications network, or satellite communications network. The transfer medium which makes up the communications network is not limited in any particular manner, and may be, for example, a wired line, such as IEEE 1394, USB, an electric power line, a cable TV line, a telephone line, or an ADSL; or wireless, such as infrared (IrDA, remote control), Bluetooth®, 802.11 wireless, HDR, a mobile telephone network, a satellite line, or a terrestrial digital network. The present invention encompasses a carrier wave, or data signal transmission, by which the program code is embodied electronically.

INDUSTRIAL APPLICABILITY

The content transfer system in accordance with the present invention is applicable not only to mobile phone handsets and television receivers, but also to PDAs, laptop computers, desktop computers, network-connectable display devices, network-connectable household electrical appliances, and like various information communications terminals.

**Claims**

1. A data transmission device including data transmission means for wirelessly transmitting communications data, the data transmission means comprising:

   one-way communications means for transmitting the communications data by one-way communications;
   two-way communications means for transmitting the communications data by two-way communications; and
   selection means for selecting which of the one-way communications means and the two-way communications means transmits the communications data.

**2.** The data transmission device as set forth in claim 1, wherein the one-way communications means transmits the communications data without receiving a signal from a receiving end.

**3.** The data transmission device as set forth in claim 1, wherein:

the two-way communications means includes normal two-way communications means for performing normal two-way communications and simple two-way communications means for performing simple two-way communications which involve less complex procedures than the normal two-way communications; and
the selection means selects which of the one-way communications means, the normal two-way communications means, and the simple two-way communications means transmits the communications data.

**4.** The data transmission device as set forth in claim 1, wherein the selection means selects, in accordance with a state of communications with a receiving end, which of the one-way communications means and the two-way communications means transmits the communications data.

**5.** The data transmission device as set forth in claim 1, wherein the selection means selects, in accordance with at least one of a data set count, type, volume, estimated communications time, and transfer history of communications data to be transmitted, which of the one-way communications means and the two-way communications means transmits the communications data.

**6.** The data transmission device as set forth in claim 1, further comprising notification means for, when the state of communications with the receiving end has deteriorated, giving a user a message which prompts the user to move the data transmission device closer to a receiving-end device.

**7.** The data transmission device as set forth in claim 1, further comprising operation means for accepting a user operation,
wherein
the selection means selects, in accordance with the user operation of the operation means, which of the one-way communications means and the two-way communications means transmits the communications data.

**8.** The data transmission device as set forth in claim 7, wherein the selection means restricts, in accordance with a data set count, type, and/or volume of communications data to be transmitted, the selection made in accordance with the user operation of the operation means.

**9.** The data transmission device as set forth in claim 1, further comprising notification means for notifying a user of whether the selection means has selected the one-way communications means or the two-way communications means.

**10.** The data transmission device as set forth in claim 1,
wherein the communications data contains content.

**11.** The data transmission device as set forth in claim 10, further comprising:

content storage means for storing plural pieces of content; and
content selection means for selecting one piece of content after the other from the plural pieces of content,

wherein
the data transmission means transmits communications data containing the piece of content selected by the content selection means.

**12.** The data transmission device as set forth in claim 10, further comprising:

content storage means for storing plural pieces of content;
content selection means for selecting one piece of content after the other from the plural pieces of content;
reproduction means for reproducing the selected piece of content or a part thereof; and
data receiving means for receiving communications data, wherein
the data transmission means transmits, in accordance with a request contained in the communications data received by the data receiving means, communications data containing a piece of content that is being reproduced or that has been reproduced.

**13.** The data transmission device as set forth in claim 12, wherein if the data receiving means receives the request either during a period from a start of reproduction of a given piece of content or a part thereof by the reproduction means to a start of reproduction of a next piece of content or a part thereof by the reproduction means or during a period defined by shifting the period by a predetermined time, the data transmission means transmits communications data containing the given piece of content.

**14.** The data transmission device as set forth in claim 10, further comprising processing means for processing the content, wherein
the data transmission means transmits communications data containing the processed content.

**15.** The data transmission device as set forth in claim 14, further comprising compression means for compressing the processed content,
wherein
the data transmission means transmits communications data containing the content compressed by the compression means.

**16.** The data transmission device as set forth in claim 14,
wherein:

the content contains a document containing a plurality of pages;
the processing means includes page detection means for detecting page divisions from the document, page dividing means for dividing the document into pages in accordance with the detected page divisions, and filing means for making the individual pages into which the document has been divided into separate files; and
the data transmission means sequentially transmits, for each of the pages, communications data containing a file of that page.

**17.** The data transmission device as set forth in claim 1, further comprising a housing containing a main body and a lid coupled to the main body like a hinge,
wherein:

the lid has a surface provided with light emitting means for transmitting the communications data by light;
the housing includes angle fixing means for holding the main body and the lid at a predetermined angle; and
the predetermined angle at which the main body and the lid are held by the angle fixing means is from 15° to 75°, inclusive.

**18.** The data transmission device as set forth in claim 1, further comprising a housing,
wherein:

the housing includes light emitting means for transmitting the communications data by light; and
the housing includes emission direction adjusting means for tilting light emitted by the light emitting means toward a normal to a surface on which the housing is disposed.

**19.** A data receiving device including data receiving means for wirelessly receiving communications data containing compressed image content, the data receiving device comprising:

content storage means for storing the compressed image content received by the data receiving means;
decompression means for retrieving the compressed image content from the content storage means and decompressing the compressed image content;
scaling means for scaling up/down the decompressed image content; and
output means for outputting the scaled image content.

**20.** The data receiving device as set forth in claim 19, further comprising display size storage means for storing a display size,
wherein
the scaling means for scale up/down the image content so that the image content corresponds to the display size.

21. The data receiving device as set forth in claim 19, wherein the scaling means is restricted in terms of scaling ratio.

22. The data receiving device as set forth in claim 19, further comprising image size obtaining means for obtaining an image size of the image content received by the data receiving means,
    wherein
    the scaling means varies a maximum value of the scaling ratio according to the obtained image size.

23. The data receiving device as set forth in claim 19,
    wherein:

    the scaling means has a function of rotating the decompressed image content;
    the data receiving means receives orientation information indicative of orientation of the image content; and
    the scaling means rotates the image content in accordance with the orientation information.

24. The data receiving device as set forth in claim 19,
    wherein:

    the data receiving means receives attribute information for the image content; and
    the output means outputs a part or all of the scaled image content and the attribute information for the image content.

25. The data receiving device as set forth in claim 19,
    wherein:

    the data receiving means further receives communications data containing a command which is instruction information given from a transmission end; and
    the scaling means converts the image content in accordance with the command.

26. The data receiving device as set forth in claim 25, wherein the command contains a parameter necessary for converting the image content.

27. The data receiving device as set forth in claim 25, wherein the command is contained in a name of a file contained in the communications data.

28. The data receiving device as set forth in claim 25, wherein when the communications data contains a file having a particular name, the data receiving means determines that the file contains image content containing a command.

29. The data receiving device as set forth in claim 25, wherein until the data receiving means determines whether incoming communications data contains a command, the output means stops output of information indicative of a reception state of the communications data.

30. The data receiving device as set forth in claim 19, wherein the scaling means scales up/down a plural pieces of image content received by the data receiving means so that the plural pieces of image content can be displayed simultaneously.

31. The data receiving device as set forth in claim 19, further comprising transmission means for externally transmitting the communications data containing the compressed image content.

32. The data receiving device as set forth in claim 19, further comprising a housing, wherein:

    the housing includes light detection means for receiving the communications data by light; and
    the light detection means is capable of detecting light within a range of incidence of 90° in a plane parallel to a surface on which the housing is disposed.

33. The data receiving device as set forth in claim 32, wherein the light detection means includes a collective lens for collecting light emitted in the range of incidence and a single light receiving element for receiving light from the collective lens.

**34.** The data receiving device as set forth in claim 32, wherein the light detection means includes a plurality of light receiving elements provided so as to detect light within different ranges of incidence.

**35.** The data receiving device as set forth in claim 32, further comprising:

display means for displaying the scaled image content; and
reception status indication means for indicating a reception status on the data receiving means,

wherein
the reception status indication means is separated from the light detection means by a distance less than or equal to a quarter of a horizontal dimension of a display screen of the display means.

**36.** A data receiving device including data receiving means for wirelessly receiving communications data, the data receiving device comprising:

data reception restriction means for restricting reception by the data receiving means.

**37.** The data receiving device as set forth in claim 36, wherein the data reception restriction means instructs the data receiving means to operate in any one of a reception mode in which all communications data is received, a restricted reception mode in which only particular communications data is received, and a reception rejecting mode in which no communications data is received.

**38.** The data receiving device as set forth in claim 37, further comprising command obtaining means for obtaining a command which is instruction information,
wherein
the data reception restriction means switches between the modes in accordance with the command obtained by the command obtaining means.

**39.** The data receiving device as set forth in claim 37, further comprising notification means for notifying a user of information,
wherein
the notification means notifies the user of a reception state of the communications data in the reception mode, notifies the user only of a reception state of the particular communications data in the restricted reception mode, and does not notify the user of a reception state of the communications data in the reception rejecting mode.

**40.** A data transfer system for wirelessly transmitting communications data from a data transmission device as set forth in any one of claims 1 to 18 to a data receiving device as set forth in any one of claims 19 to 39.

**41.** A method of controlling a data transmission device for wirelessly transmitting communications data, the data transmission device including one-way communications means for transmitting the communications data by one-way communications and two-way communications means for transmitting the communications data by two-way communications, said method comprising the step of selecting, in accordance with at least one of a state of communications with a receiving end and a data set count, type, volume, estimated communications time, and transfer history of communications data to be transmitted, which of the one-way communications means and the two-way communications means transmits the communications data.

**42.** A method of controlling a data receiving device including data receiving means for wirelessly receiving communications data containing compressed image content, said method comprising the steps of:

storing, in content storage means, the compressed image content received by the data receiving means;
retrieving the compressed image content from the content storage means and decompressing the compressed image content;
scaling up/down the decompressed image content; and
outputting the scaled image content from the output means.

**43.** A method of controlling a data receiving device including data receiving means for wirelessly receiving communications data, said method comprising the step of:

restricting reception by the data receiving means.

44. A data transmission device control program for causing a computer to operate as the individual means in a data transmission device as set forth in any one of claims 1 to 18.

45. A data receiving device control program for causing a computer to operate as the individual means in a data receiving device as set forth in any one of claims 19 to 39.

46. A computer-readable storage medium containing at least either one of a data transmission device control program as set forth in claim 44 and a data receiving device control program as set forth in claim 45.

F I G. 1

F I G. 2

F I G. 3

| | Receiver at a distance | Multiple receivers | Reliability | Transfer to specific recipient |
|---|---|---|---|---|
| Two-way communications | Poor | Poor | Optimal | Optimal |
| One-way communications | Optimal | Optimal | Poor | Adequate |

EP 1 953 989 A1

F I G. 4

| | Disadvantages | Advantages |
| --- | --- | --- |
| Normal two-way communications | Large overhead, low transfer rate | Reliable selection of receiver<br>Recipient authenticated before data transfer<br>Allows for verification of success/failure of transmission |
| Simple two-way communications | Difficult to establish connection if multiple recipients respond simultaneously | Relatively high transfer rate<br>Recipient authenticated before data transfer<br>Allows for verification of success/failure of transmission |
| One-way communications | Requires receiver to be compatible with the method<br>No way of knowing success or failure of transmission<br>Possible memory overflow in continuous transmission | High transfer rate<br>Simultaneous data transfer to multiple recipients<br>Requires no transmission means in receiver |

EP 1 953 989 A1

F I G. 5 (a)

F I G. 5 (c)

F I G. 5 (b)

F I G. 5 (d)

FIG. 6 (a)

FIG. 6 (b)

EP 1 953 989 A1

F I G. 7

42

# F I G. 8

Content Receiving Device

49

53 External I/F section

52 Link Establishing Section

51 Internal I/F Section

40 Control Section

47 Communications Scheme Switching Section

54 Communications Mode Identifying Section

55 Normal Two-way Communications Control Section

56 Simple Two-way Communications Control Section

50 Two-way Communications Control Section

EP 1 953 989 A1

FIG. 9 (a)

FIG. 9 (b)

FIG. 9 (c)

FIG. 10

```
                              ┌─────────────┐
                              │    START    │
                              └─────────────┘
                                     │
      ┌──────────────────────────────┼──────────────────────────────────┐
      │                              │                                   │
      │        S10┐     ┌────────────────────────┐                       │
      │           └─────│     Display content     │                      │
      │                 └────────────────────────┘                       │
      │                              │                                   │
      │        S11┐     ┌────────────────────────┐                       │
      │           └─────│     Select content      │                      │
      │                 └────────────────────────┘                       │
      │                              │                                   │
      │           One-way       S12┐ ╱╲  Non-transferable                │
      │        communications      ╱    ╲    content                     │
      │       ┌────────────────── ╱Transmission╲ ──────────────┐         │
      │       │                   ╲  means?  ╱                  │         │
      │       │                    ╲      ╱                     │    ┌─S19│
      │       │                     ╲   ╱  Two-way              ▼         │
      │  S13┐ ▼                      ╲╱   communications   ┌──────────┐   │
      │ ┌────────────┐          S14┐  │              │Display error │   │
      │ │  One-way   │         ┌────────────┐         │  message     │   │
      │ │communications│        │  Two-way   │         └──────────┘   │
      │ └────────────┘         │communications│              │       ──▶
      │       │                └────────────┘               │
      └───────┘                      │                       │
                            S15┐ ┌────────────┐              │
                               └─│ Detect mode │             │
                                 └────────────┘              │
                                      │                      │
                            S16┐     ╱╲                      │
                                    ╱    ╲   Normal mode      │
                                   ╱ Mode? ╲ ───────────┐     │
                                   ╲      ╱             │     │
                           S17┐     ╲   ╱  Simple mode S18┐   │
                                      ╲╱  │         ▼         │
                              ┌────────────┐    ┌────────────┐│
                              │Simple two-way│   │Normal two-way││
                              │communications│   │communications││
                              └────────────┘    └────────────┘│
                                      │                │       │
                                      └────────────────┴───────┘
```

45

FIG. 11 (a)    FIG. 11 (b)    FIG. 11 (c)

| | | |
|---|---|---|
| SNRM Command → | SNRM Command → | SNRM Command → |
| ← UA Response | | |
| | XID Command → | XID Command → |
| | ← XID Response | |
| | XID-End Command → | XID-End Command → |
| IrSimple Data Transfer | | SNRM Command → |
| | IrDA Connection | |
| | | Transmission of four commands repeated |

1 set

EP 1 953 989 A1

## FIG. 13 (a)

## FIG. 13 (b)

F I G.  1 4  (a)

80 — Received Content

F I G.  1 4  (b)

1,920 pixels

81 — Display Memory

1,080 pixels

FIG. 15 (a)

80(80a)

FIG. 15 (b)

80(80b)

FIG. 15 (c)

80(80c)

FIG. 16 (a)

80(80d)

FIG. 16 (b)

80(80e)

FIG. 16 (c)

80(80f)

FIG. 15 (d)

82(82a)

81

FIG. 15 (e)

82(82b)

81

FIG. 15 (f)

82(82c)

81

FIG. 16 (d)

82(82d)

81

FIG. 16 (e)

82(82e)

81

FIG. 16 (f)

82(82f)

81

FIG. 17 (a)

81

82(82b')

FIG. 17 (b)

82(82e')

81

FIG. 17 (c)

82(82e")

81

FIG. 18

```
                    ┌─────────┐
                    │  START  │
                    └────┬────┘
                         │
    ┌────────────────────┼──────────────────────────────────────────┐
    │              S30   │                                   S37      │
    │                  ◇─┴─◇              Command          ┌──────────┴──┐
    │             Data received? ──────────────────────┐  │Display error│
    │                  ◇───◇                            │  │  message    │
    │                    │ Content                      │  └──────┬──────┘
    │                    │                        S35   ▼         │
    │      S31           │                           ◇──┴──◇  NO  │
    │    ┌───────────────┴┐                      Image exists? ───┘
    │    │  Set scaling   │                         ◇─────◇
    │    │     ratio      │                            │ YES
    │    └───────┬────────┘                    S38     │
    │            │                               ◇─────┴─────◇
    │      S32   │                       Rotate   Command?    Move
    │    ┌───────┴────────┐            ┌──────◇──────────◇──────────┐
    │    │   Decompress   │            │          │                 │
    │    └───────┬────────┘            │          │ Scale           │
    │            │                     │          │ up/down         │
    │            │              S39    ▼          │          S42    ▼
    │      S33   │            ┌────────┴──┐       │        ┌─────────┴──┐
    │    ┌───────┴────────┐   │  Rotate   │       │        │ Move image │
    │    │  Scale up/down │   └────────┬──┘       │        │ on screen  │
    │    └───────┬────────┘            │          │        └─────┬──────┘
    │            │              S40    ▼          │              │
    │            │          NO    ◇────┴────◇     │              │
    │      S34   │          ┌─── Scaling         │              │
    │    ┌───────┴────────┐ │    up/down          │              │
    │    │    Display     │ │    needed?          │              │
    │    │   attribute    │ │  ◇─────────◇        │              │
    │    │  information   │ │       │ YES          │              │
    │    └───────┬────────┘ │ S41   ▼ ◄───────────┘              │
    │            │          │ ┌─────┴──────┐                     │
    │            │          │ │ Scaling up/│                     │
    │            │          │ │   down     │                     │
    │            │          │ └─────┬──────┘                     │
    │      S43   │ ◄────────┴───────┴──────────────────────────┘
    │    ┌───────┴────────┐
    │    │    Display     │
    │    └───────┬────────┘
    │            │
    └────────────┘
```

FIG. 19

START

S10 — Display content

S11 — Select content

S50 — Content type?

Content, one-way communications allowed

Content, transfer prohibited

Content, one-way communications prohibited

S51 — Transfer menu

S52 — Display one/two-way communications selection item

S53 — Select transfer ?

Two-way

S13 — One-way communications

One-way

S54 — Display start transfer message

S55 — Transfer?

NO

YES

S19 — Display error message

S14 — Two-way communications

S15 — Detect mode

S16 — Mode?

Normal mode

Simple mode

S17 — Simple two-way communications

S18 — Normal two-way communications

FIG. 20

Send photograph

1. One-way communications
2. Two-way communications

85

32

Email          Send          Menu

FIG. 21

FIG. 22

# FIG. 23

Television Receiver — 18

```
                        ┌─────────────┐ 62
                        │   Command   │
                        │  Analysis   │
                        │   Section   │
                        └─────────────┘

┌──────────────┐ 61  ┌──────────────┐ 64  ┌──────────────┐ 65
│Communications│     │  Attribute   │     │  Attribute   │
│   Section    │     │Storage Section│    │ Determining  │
│              │     │              │     │   Section    │
└──────────────┘     └──────────────┘     └──────────────┘

                     ┌──────────────┐ 63  ┌──────────────┐ 66  ┌──────────────┐ 60  ┌──────────────┐ 67
                     │   Content    │     │   Content    │     │Control Section│    │ Display Size │
                     │Storage Section│    │Decompression │     │              │     │Storage Section│
                     │              │     │   Section    │     │              │     │              │
                     └──────────────┘     └──────────────┘     └──────────────┘     └──────────────┘

                                          ┌──────────────┐ 68
                                          │    Image     │
                                          │  Processing  │
                                          │   Section    │
                                          └──────────────┘

                                          ┌──────────────┐ 17
                                          │Display Device│
                                          └──────────────┘
```

Print Data Transmission Section — 99

Printer — 97

EP 1 953 989 A1

F I G. 2 4

START

S30 Data received?

Command

S37 Display error message

Content

S35 Image exists?

NO

S31 Set scaling ratio

YES

S38 Command?

Rotate

Print

S32 Decompress

Scale up/down

Move

S39 Rotate

S42 Move image on screen

S60 Prepare printing

S33 Scale up/down

S40 Scaling up/down needed?

NO

S61 Print

S34 Display attribute information

YES

S41 Scaling up/down

S43 Display

EP 1 953 989 A1

F I G. 2 5

Printer — 97

- Command Analysis Section — 62
- Communications Section — 61
- Attribute Storage Section — 64
- Attribute Determining Section — 65
- Content Storage Section — 63
- Content Decompression Section — 66
- Control Section — 60
- Display Size Storage Section — 67
- Affine Transformation Section — 68
- Print Section — 101

Television Receiver — 18

Print Data Receiving Section — 100

F I G. 2 6

START

S62 — Wireless reception mode?

Wireless rejection mode

S63 — Data received through a wire(s)?

NO

YES

S65 — Data received through a wire(s)?

ON mode or sleep mode

YES

NO

S66 — Data received wirelessly?

NO

YES

S67 — Sleep mode?

YES

S68 — ON command?

NO

NO

YES

S70 — Sleep command?

NO

YES

S64 — Process received data

S71 — Switch to sleep mode

S69 — Switch to ON mode

F I G. 2 7

F I G. 2 8

FIG. 29

```
                                              18
                                             ↗

       46                   17        44                 125        40
        ⌐                    ⌐         ⌐                   ⌐          ⌐
  ┌───────────┐      ┌───────────┐ ┌───────────┐   ┌───────────┐ ┌───────────┐
  │ Operation │      │  Display  │ │  Content  │   │  Command  │ │  Control  │
  │  Section  │      │  Device   │ │Decompression│ │ Obtaining │ │  Section  │
  └───────────┘      └───────────┘ │  Section  │   │  Section  │ └───────────┘
                                   └───────────┘   └───────────┘

       47
        ⌐
  ┌───────────┐
  │Communications│
  │  Scheme   │
  │ Switching Section │
  └───────────┘

       48                          49
        ⌐                           ⌐
  ┌───────────┐              ┌───────────┐
  │ One-way   │              │ Two-way   │
  │Communications│           │Communications│
  │  Section  │              │  Section  │
  └───────────┘              └───────────┘

       41
        ⌐
  ┌───────────┐
  │  Content  │
  │  Storage Section │
  └───────────┘

       42
        ⌐
  ┌───────────┐
  │ Attribute │
  │ Storage Section │
  └───────────┘
```

61

F I G.  3 0

```
                    ┌─────────────┐
                    │    START    │
                    └──────┬──────┘
   ┌───────────────────────┼───────────────────────────────┐
   │              ┌─────────────────────┐ ⌐S80              │
   │              │   Receive command   │                   │
   │              └─────────────────────┘                   │
   │      Content Switching  │  Transmission Request         │
   │   S81 ┌──────▼──────┐       S84 ┌──────▼──────────┐     │
   │       │Switch content│          │Select requested│     │
   │       │              │          │   content      │     │
   │       └──────┬───────┘          └──────┬─────────┘     │
   │   S82        │              S85        │               │
   │  ┌───────────▼──────┐      ┌───────────▼──────┐        │
   │  │   Produce or     │      │  Send the content │        │
   │  │select content    │      │                   │        │
   │  │    subset        │      └───────────┬──────┘        │
   │  └──────────┬───────┘                  │               │
   │   S83       │                          │               │
   │  ┌──────────▼──────────┐               │               │
   │  │Reproduce content    │               │               │
   │  │     subset          │               │               │
   │  └─────────────────────┘               │               │
   └────────────────────────────────────────┘               
```

FIG. 31

Part of content A    Part of content B    Part of content C    Part of content D

Replay Sequence

Time

Content Designation Period

A designation
period

B designation
period

C designation
period

D designation
period

Designation by user

Content B transferred

FIG. 32 (a)　　　　FIG. 32 (b)

F I G. 3 3

EP 1 953 989 A1

## INTERNATIONAL SEARCH REPORT

| International application No. |
|---|
| PCT/JP2006/322482 |

A. CLASSIFICATION OF SUBJECT MATTER
*H04L29/06*(2006.01)i, *G06F13/00*(2006.01)i, *H04M1/02*(2006.01)i, *H04N7/173* (2006.01)i, *H04Q7/38*(2006.01)i

According to International Patent Classification (IPC) or to both national classification and IPC

B. FIELDS SEARCHED

Minimum documentation searched (classification system followed by classification symbols)
H04L29/06, G06F13/00, H04M1/02, H04N7/173, H04Q7/38

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2000-196654 A (Toshiba Corp.),<br>14 July, 2000 (14.07.00),<br>Par. No. [0050]<br>(Family: none) | 1,2,44<br>3 |
| Y | Kumiko YAMAGUCHI, Masaharu NAKATSUCHI, "Keitai Denwaki eno IrSimple Tekiyo ni Kansuru Kento", 2005 Nen IEICE Communications Society Conference, 07 September, 2005 (07.09.05), page 618, chapter 3 | 3 |
| A | JP 2001-145164 A (Fujitsu Ltd.),<br>25 May, 2001 (25.05.01),<br>Full text; all drawings<br>(Family: none) | 1-3,44 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19 January, 2007 (19.01.07) | 30 January, 2007 (30.01.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2006/322482 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2004-41375 A  (Olympus Corp.),<br>12 February, 2004 (12.02.04),<br>Claim 1<br>& US 2003/93503 A1 | 1-3,44 |
| A | JP 8-314831 A  (International Business Machines Corp.),<br>29 November, 1996 (29.11.96),<br>Par. No. [0032]<br>& US 5850189 A | 1-3,44 |

Form PCT/ISA/210 (continuation of second sheet) (April 2005)

## REFERENCES CITED IN THE DESCRIPTION

### Patent documents cited in the description

- JP 2000010745 A
- JP 2004154960 A
- JP 2004177586 A
- JP 113177241999 B
- JP 11317724 A